# EUROPÄISCHE PATENTSCHRIFT

(11) **EP 0 647 683 B1**
(45) Veröffentlichungstag und Bekanntmachung des Hinweises auf die Patenterteilung: **22.03.2000**
(21) Anmeldenummer: 94810566.3
(22) Anmeldetag: 28.09.1994
(51) Int. Cl.: C09B 62/006, D06P 1/38

(54) **Reaktivfarbstoffe, Verfahren zu deren Herstellung und deren Verwendung**
Reactive dyestuffs, process for their production and their use
Colorants réactifs, leur procédé de production et leur utilisation

(30) Priorität: 07.10.1993 CH 302293
(43) Veröffentlichungstag der Anmeldung: 12.04.1995
(73) Patentinhaber: Ciba Specialty Chemicals Holding Inc., 4057 Basel (CH)
(72) Erfinder: Deitz, Rolf, CH-4058 Basel (CH); Herzig, Paul, CH-4058 Basel (CH); Tzikas, Athanassios, Dr., CH-4133 Pratteln (CH)

(56) Entgegenhaltungen:
- EP-A- 0 554 746
- EP-A- 0 632 107
- DE-A- 2 921 309
- DE-A- 3 002 365
- DE-A- 3 829 595
- DE-A- 3 916 661

## Beschreibung

Die vorliegende Erfindung betrifft neue Reaktivfarbstoffe, Verfahren zu deren Herstellung und deren Verwendung zum Färben und Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von cellulosehaltigen Stoffen wie Baumwolle werden heute Reaktivfarbstoffe gefordert, die eine ausreichende Substantivität haben, und die zugleich eine gute Auswaschbarkeit der nicht fixierten Anteile aufweisen. Sie sollen ferner eine hohe Reaktivität besitzen und insbesondere Färbungen mit hohen Fixiergraden liefern. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von cellulosehaltigen Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel 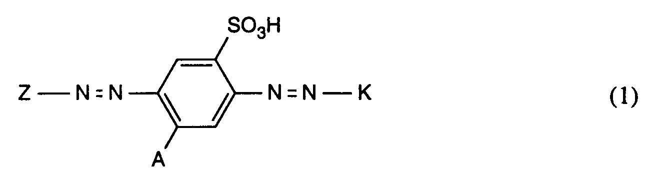 worin
A einen faserreaktiven Rest -NR'-A₁ bedeutet,
R' Wasserstoff oder C₁-C₄-Alkyl ist,
A₁ für einen Halopyrimidinyl-, Halochinoxalincarbonyl- oder Triazinylrest oder für einen Rest der Formel

   - CO - CH₂ - X) (2a)

   - CO - (CH₂)ₙ-SO₂- Y) (2b),

   - COCHX₁ - CH₂X₁) (2c) oder

   -COCX₁ = CH₂ (2d) steht,
worin Y Vinyl oder einen Rest -CH₂-CH₂-U bedeutet und U eine Abgangsgruppe ist, X und X₁ unabhängig voneinander je Chlor oder Brom sind und n eine ganze Zahl 1 bis 6 bedeutet, steht,
K der Rest einer Kupplungskomponente ist, und
Z für den Rest einer Diazokomponente der Benzol- oder Naphthalinreihe steht, welche mindestens einen faserreaktiven Rest der Formel

   - SO₂- Y (3a),

   - CONH - (CH₂)ₘ- SO₂- Y (3b),

   - CONH - (CH₂)ₘ₁-O- (CH₂)ₘ - SO₂- Y (3c),

   - (O)ₚ- (CH₂)_{q}- CONH - (CH₂)ₘ- SO₂- Y (3d),

   -NH-CO-CHX₁-CH₂X₁ (3e) oder

   -NH-CO-CX₁=CH₂ (3f)
worin X₁ und Y jeweils die oben angegebene Bedeutung haben, p die Zahl 0 oder 1 und m, m₁ und q unabhängig voneinander je eine ganze Zahl von 1 bis 6 bedeuten, trägt, mit der Massgabe, dass
K nicht 5,7-Disulfo-2-amino-naphth-1-yl bedeutet, wenn A₁ ein Triazinylrest ist und Z für einen Phenylrest steht, welcher einen faserreaktiven Rest der Formel (3a) trägt, worin Y Vinyl oder einen Rest -CH₂-CH₂-U bedeutet und U Sulfato oder Chlor ist.

In der EP-A-632 107 werden Disazofarbstoffe offenbart, die eine endständige 2-Amino-naphth-1-yl-Kupplungskomponente enthalten.

C₁-C₄-Alkyl bedeutet generell Methyl, Ethyl, n- oder iso-Propyl oder n-, iso-, sec.- oder tert.-Butyl; C₁-C₄-Alkoxy umfasst generell Methoxy, Ethoxy, n- oder iso-Propoxy und n-, iso-, sec.- oder tert.-Butoxy; Halogen steht generell z.B. für Fluor, Brom oder insbesondere Chlor; Beispiele für gegebenenfalls substituiertes C₂-C₅-Alkanoylamino sind Acetylamino, Propionylamino und Hydroxyacetylamino. C₁-C₄-Alkoxycarbonyl bedeutet generell Methoxycarbonyl, Ethoxycarbonyl, n- oder iso-Propoxycarbonyl oder n-, iso-, sec.- oder tert-Butoxycarbonyl, vorzugsweise Methoxycarbonyl oder Ethoxycarbonyl. Beispiele für C₂-C₅-Alkanoyloxy sind Acetyloxy oder Propionyloxy. Beispiele für C₁-C₄-Alkylthio sind Methylthio und Ethylthio.

R' steht bevorzugt für Wasserstoff, Methyl oder Ethyl und besonders bevorzugt für Wasserstoff.

Bedeutet A₁ einen Halopyrimidinyl- oder Halochinoxalincarbonylrest, so kann dies z.B. der 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder - 5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2,3-Dichlorchinoxalin-6-carbonyl-, 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-tri-fluormethyl-pyrimidinyl-4, 6-Fluor-2-methylpyrimidinyl-4, 6-Fluor-5-chlor-2-methylpyrimidinyl-4, 5,6-Difluor-pyrimidinyl-4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methyl- sulfonyl-pyrimidinyl-4 oder 6-Fluor-5-phenylsulfonylpyrimidinyl-4-Rest sein.

Bevorzugt steht A₁ als Halopyrimidinyl- oder Halochinoxalincarbonylrest für den 2,4,5-Trichlorpyrimidinyl-6-, 2,4-Dichlor-5-cyanopyrimidinyl-6-, 2,4-Difluor-5-chlorpyrimidinyl-6-, 2-Fluor-5-chloro-6-methylpyrimidinyl-4- oder 2,3-Dichlorochinoxalin-6-carbonyl-Rest.
Bedeutet A₁ einen Triazinylrest, so entspricht dieser z.B. der Formel 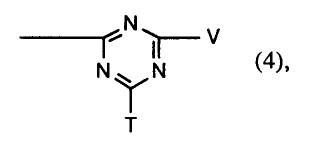
worin T Chlor, Fluor, Brom, 3-Carboxypyridin-1-yl, 3-Carbamoylpyridin-1-yl oder einen Reaktivrest der Formel 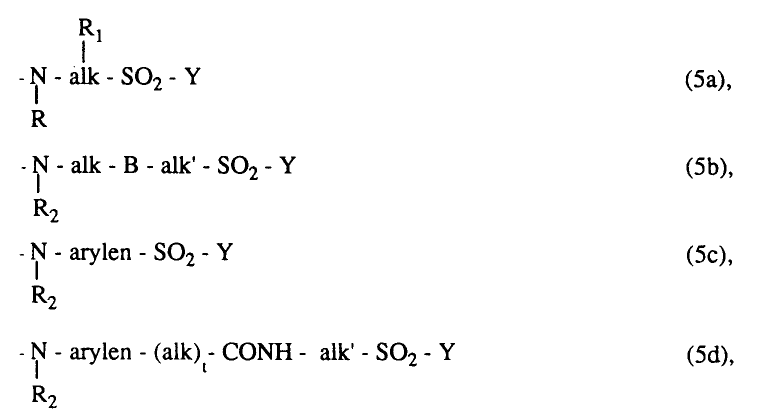 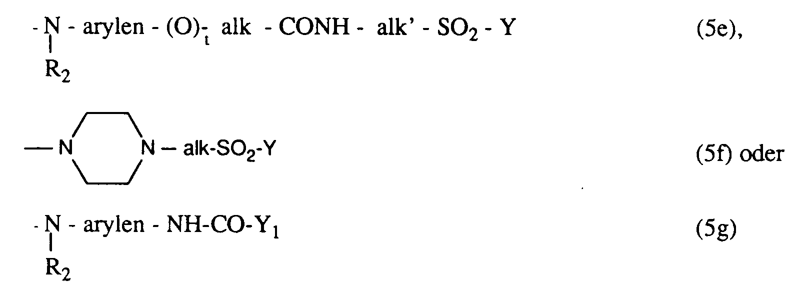 bedeutet,
R Wasserstoff, gegebenenfalls durch Hydroxy, Sulfo, Sulfato, Carboxy oder Cyano substituiertes C₁-C₄-Alkyl oder einen Rest 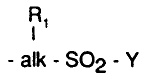 bedeutet,
R₁ Wasserstoff, Hydroxy, Sulfo, Sulfato, Carboxy, Cyano, Halogen,
C₁-C₄-Alkoxycarbonyl, C₂-C₅-Alkanoyloxy, Carbamoyl oder die Gruppe -SO₂-Y ist,
R₂ für Wasserstoff oder C₁-C₄-Alkyl steht,
alk und alk' unabhängig voneinander C₁-C₆-Alkylen sind,
arylen einen unsubstituierten oder durch Sulfo, Carboxy, Hydroxy, C₁-C₄-Alkyl,
C₁-C₄-Alkoxy oder Halogen substituierten Phenylen- oder Naphthylenrest bedeutet
Y₁ für eine Gruppe -CHX₁-CH₂X₁ oder -CX₁=CH₂ steht und X₁ Chlor oder Brom bedeutet,
B den Rest -O- oder -NR₂- bedeutet, und
t für die Zahl 0 oder 1 steht, und
V unabhängig die Bedeutung von T hat oder für einen nicht-reaktiven Rest aus der Gruppe Hydroxy, C₁-C₄-Alkoxy, Phenoxy, C₁-C₄-Alkylthio, Morpholino und gegebenenfalls substituiertes Amino steht.

Geeignete Abgangsgruppen U sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H, vorzugsweise -OSO₃H.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

X₁ bedeutet vorzugsweise Brom.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' unabhängig voneinander je für einen C₁-C₄-Alkylenrest und insbesondere bevorzugt für einen Ethylenrest oder Propylenrest.

Bevorzugt ist arylen ein unsubstituierter oder z.B. durch Sulfo, Methyl, Methoxy oder Carboxy substituierter 1,3- oder 1,4-Phenylenrest und besonders bevorzugt ein unsubstituierter 1,3- oder 1,4-Phenylenrest.

R steht bevorzugt für C₁-C₄-Alkyl oder insbesondere bevorzugt für Wasserstoff.

R₁ bedeutet bevorzugt Wasserstoff.

R₂ bedeutet bevorzugt Wasserstoff, Methyl oder Ethyl, insbesondere Wasserstoff.

B steht vorzugsweise für -NH- oder -O- und insbesondere bevorzugt für - O-.

t steht bevorzugt für die Zahl 0.

Bevorzugt als Reste der Formeln (5a) bis (5g) sind solche, worin R, R₁ und R₂ je Wasserstoff, B der Rest -O- oder -NH- , alk und alk' unabhängig voneinander je Ethylen oder Propylen, arylen unsubstituiertes oder durch Methyl, Methoxy, Chlor, Hydroxy, Carboxy oder Sulfo substituiertes Phenylen, Y Vinyl oder β-Sulfatoethyl, Y₁ -CHBr-CH₂Br oder -CBr=CH₂ und t die Zahl 0 bedeuten.

Steht V für einen nicht-reaktiven gegebenenfalls substituierten Aminorest, so kann es sich z.B. um Amino, N-C₁-C₄-Alkylamino oder N,N-Di-C₁-C₄-Alkylamino, wobei das Alkyl gegebenenfalls z.B. durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl gegebenenfalls z.B. durch C₁-C₄-Alkyl, C₁-C₄-Alkoxy, Amino, C₂-C₄-Alkanoylamino, Carboxy, Sulfo oder Halogen substituiert ist, handeln.

Beispiele für geeignete nicht-reaktive Reste V sind Amino, Methylamino, Ethylamino, β-Hydroxyethylamino, N,N-Di-β-Hydroxyethylamino, β-Sulfoethylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, 2,4- oder 2,5-Disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 3,6,8-Trisulfo-2-naphthylamino, 1,6-Disulfonaphthylamino, N-Ethyl-N-phenylamino, N-Methyl-N-phenylamino, Morpholino, Methoxy, Ethoxy, n-oder iso-Propoxy sowie Hydroxy.

Als nicht-reaktiver Rest hat V vorzugsweise die Bedeutung C₁-C₄-Alkoxy, C₁-C₄-Alkylthio, Hydroxy oder insbesondere Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder durch 1 bis 3 Sulfogruppen substituiertes 2-Naphthylamino.

Besonders bevorzugte nicht-reaktive Reste V sind Amino, N-Methylamino, N-Ethylamino, β-Sulfoethylamino, Phenylamino, 2-, 3- oder 4-Sulfophenylamino, 2,4- oder 2,5-Disulfophenylamino, Mono-, Di- oder Trisulfo-2-naphthylamino, N-C₁-C₂-Alkyl-N-phenylamino oder Morpholino.

Eine weitere Gruppe von geeigneten Aminoresten V entspricht der Formel

-NR''- Fa,

worin Fa einen Monoazorest -(D - N=N - K₁) oder den Rest eines Formazans bedeutet, für R'' unabhängig die für R' genannten Bedeutungen und Bevorzugungen gelten, D der Rest einer Diazokomponente der Benzol- oder Naphthalinreihe oder der heterocyclischen Reihe ist und K₁ für den Rest einer Kupplungskomponente steht. D bedeutet hierbei bevorzugt einen Phenyl- oder 1- oder 2-Naphthylrest, der durch 1 bis 3 Substituenten aus der Reihe Methyl, Methoxy, Chlor, Sulfo und Rest der Formel -SO₂-Y, worin Y die zuvor angegebene Bedeutung hat, substituiert ist. K steht z.B. für den Rest von 1-Amino-8-hydroxynaphthalin-3,6-disulfonsäure (H-Säure), für den Rest von K-, I- oder J-Säure oder für einen Rest der weiter unten angegebenen Formel (6a), (6b), (6d) oder (6e).

Geeignete Formazanreste Fa entsprechen z.B. der Formel 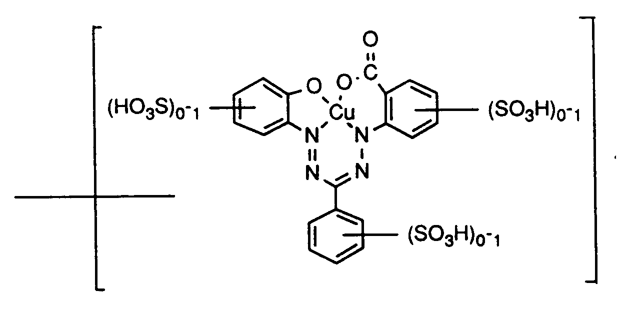 A₁ steht als faserreaktiver Triazinylrest bevorzugt für einen Rest der zuvor angegebenen Formel (4), worin T Chlor oder Fluor ist und V C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, durch 1 bis 3 Sulfogruppen substituiertes 2-Naphthylamino oder einen Reaktivrest der zuvor angegebenen Formel (5a) bis (5g) bedeutet.

A₁ steht als faserreaktiver Triazinylrest besonders bevorzugt für einen Rest der zuvor angegebenen Formel (4), worin T Chlor oder Fluor ist und V Amino, N-Methylamino, N-Ethylamino, β-Sulfoethylamino, Phenylamino, 2-, 3- oder 4-Sulfophenylamino, 2,4-oder 2,5-Disulfophenylamino, Mono-, Di- oder Trisulfo-2-naphthylamino, N-C₁-C₂-Alkyl-N-phenylamino oder Morpholino bedeutet.

A₁ steht als faserreaktiver Triazinylrest ausserdem bevorzugt für einen Rest der zuvor angegebenen Formel (4), worin T Chlor oder Fluor ist und V einen faserreaktiven Rest der Formel 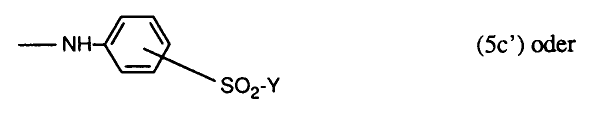 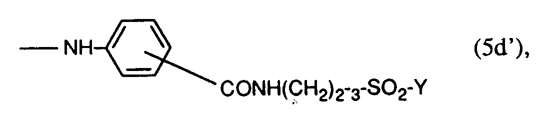 worin Y Vinyl oder β-Sulfatoethyl ist, bedeutet.

Steht A₁ für einen faserreaktiven Rest der Formel (2a) bis (2d), so sind hierbei solche Reste bevorzugt, worin X Chlor, X₁ Brom, Y Vinyl oder β-Sulfatoetyl und n die Zahl 2, 3 oder 4 bedeuten. Von besonderem Interesse sind hierbei Verbindungen der Formel (1), worin A den Rest -NH-A₁ bedeutet und A₁ für den Chloracetylrest steht.

K bedeutet insbesondere den Rest einer wasserlöslichen Kupplungskomponente aus der Reihe der Aminobenzole oder Phenole, insbesondere der sulfonierten oder carboxylierten Aminobenzole oder Phenole; der Naphthylamine oder Naphthole, insbesondere der sulfonierten oder carboxylierten Naphthylamine oder Naphthole; der Aminonaphthole, insbesondere der sulfonierten Aminonaphthole; der Acylaminonaphthole, insbesondere der sulfonierten Acylaminonaphthole mit dem Acylrest einer Alkan- oder Alkencarbonsäure mit jeweils 1 bis 4, vorzugsweise 2 bis 4 C-Atomen im Alkyl- bzw. Alkenylteil oder aus der Reihe der Pyrazolone, Pyridone oder Pyrimidine, wobei K neben den in Farbstoffen üblichen Substituenten eine weitere Azogruppe und/oder eine oder mehrere faserreaktive Gruppen enthalten kann.

Aus der Reihe der Substituenten am Rest K seien beispielsweise genannt Niederalkylgruppen mit 1 bis 4 Kohlenstoffatomen wie Methyl, Aethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Hydroxy-C₁-C₂-Alkoxy, z.B. Hydroxyethoxy, Acylaminogruppen mit 1 bis 8 Kohlenstoffatomen, insbesondere Alkanoylaminogruppen, wie Acetylamino, oder Propionylamino, oder Benzoylamino; Phenylamino, N,N-Di-β-hydroxyethylamino, N,N-Di-β-sulfatoethylamino, Sulfobenzylamino, N,N-Disulfobenzoylamino; Alkoxycarbonyl mit 1 bis 4 Kohlenstoffatomen im Alkoxyrest, wie Methoxycarbonyl oder Ethoxycarbonyl; Alkylsulfonyl mit 1 bis 4 Kohlenstoffatomen, wie Methylsulfonyl oder Ethylsulfonyl; Trifluormethyl, Nitro, Cyano, Halogen, wie Fluor, Chlor oder Brom; Carbamoyl, N-Alkylcarbamoyl mit 1 bis 4 Kohlenstoffatomen im Alkylrest, wie N-Methylcarbamoyl oder N-Ethylcarbamoyl; Sulfamoyl, N-Alkyl-sulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl; N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl, Sulfo, Benzoyl, C₂-C₅-Alkanoyl, z.B. Acetyl oder Propionyl, Phenylazo, welches durch einen oder mehrere Reste z.B. aus der Gruppe Sulfo, Methyl, Methoxy, Chlor und Reaktivrest der zuvor angegebenen Formel (3a), (3b) oder (4) weitersubstituiert ist, oder Naphthylazo, welches durch einen oder mehrere Reste aus der Gruppe Hydroxy, Amino, Sulfo und Reaktivrest der zuvor angegebenen Formel (3a) oder (4) weitersubstituiert ist.

Trägt K eine oder mehrere faserreaktive Gruppen, so handelt es sich um übliche aliphatische oder heterocyclische Reste mit abspaltbaren Gruppen oder Atomen, z.B. um einen Rest der zuvor angegebenen Formel (3a) oder (3b), einen zuvor angegebenen Halopyrimidinyl- oder Halochinoxalincarbonylrest oder vorzugsweise um einen faserreaktiven Triazinylrest der zuvor angegebenen Formel (4).

K steht vorzugsweise für einen 1- oder 2-Naphtholrest, der gegebenenfalls durch Sulfo oder einen Rest -SO₂-Y, worin Y die zuvor angegebene Bedeutung hat, substituiert ist; einen 1- oder 2-Naphthylaminrest, der gegebenenfalls durch Hydroxy, Sulfo oder einen Rest -SO₂-Y, worin Y die zuvor angegeben Bedeutung hat, substituiert ist; oder für einen Rest der Formel 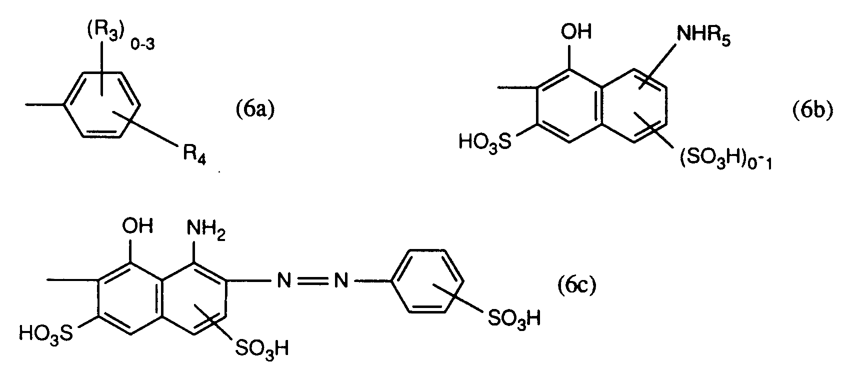 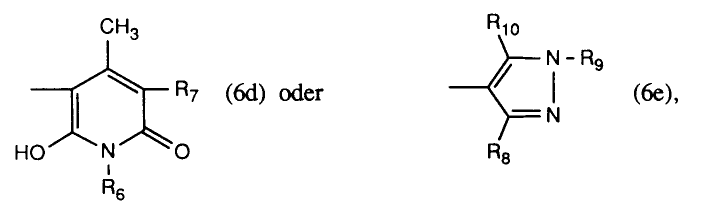 worin
(R₃)₀₋₃ 0 bis 3 Reste aus der Gruppe C₁-C₄-Alkyl, C₁-C₄-Alkoxy, Halogen,
C₁-C₄-Alkoxy-C₁-C₂-Alkoxy, Hydroxy, Hydroxy-C₁-C₂-Alkoxy, C₂-C₅-Alkanoyloxy,
C₁-C₄-Alkylsulfonyl, C₂-C₅-Alkanoylamino, N-C₁-C₄-Alkylsulfamoyl und Sulfo bedeutet,
R₄ Hydroxy, C₁-C₄-Alkoxy oder ein Rest -NR₁₁R₁₂ ist und R₁₁ und R₁₂ unabhängig voneinander Wasserstoff, C₂-C₅-Alkanoyl oder gegebenenfalls durch Hydroxy, Sulfo oder Sulfato substituiertes C₁-C₄-Alkyl bedeuten,
R₅ für Wasserstoff, C₂-C₅-Alkanoyl, Benzoyl oder für einen Rest der zuvor angegebenen Formel (4) steht,
R₆ C₁-C₄-Alkyl bedeutet,
R₇ Carbamoyl, Cyano oder Sulfomethyl ist,
R₈ C₁-C₄-Alkyl oder Carboxy bedeutet,
R₉ unsubstituiertes oder durch Halogen, Sulfo, C₁-C₄-Alkyl oder C₁-C₄-Alkoxy substituiertes Phenyl oder Naphthyl ist, und
R₁₀ Hydroxy oder Amino bedeutet.

Besonders bevorzugt sind für K die folgenden Bedeutungen: 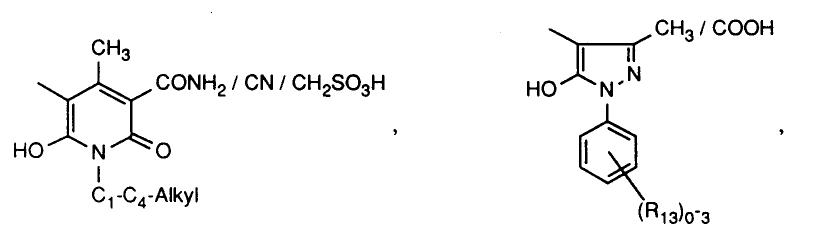 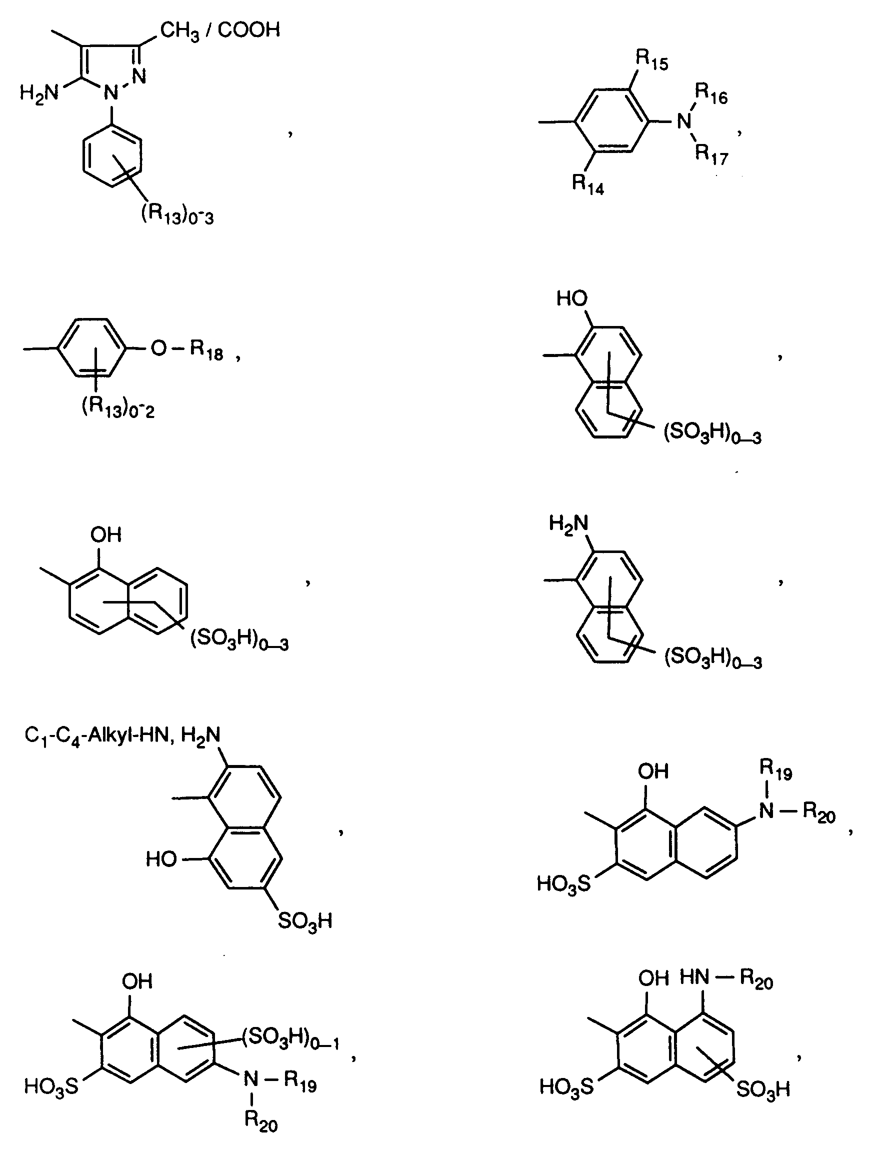 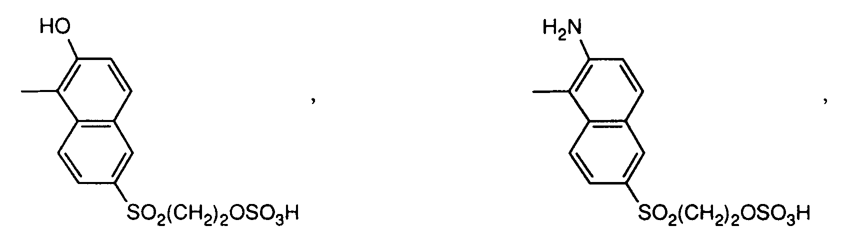 worin (R₁₃)₀₋₃ für 0 bis 3 gleiche oder verschiedene Substituenten aus der Gruppe Methyl, Methoxy, Hydroxy, Chlor und Sulfo steht, R₁₄ Wasserstoff, Methyl, Methoxy, Hydroxy, Chlor, Acetyl, Acetylamino, Hydroxyacetylamino, Propionylamino, Ureido oder Methyl-oder Ethylsulfonyl ist, R₁₅ Wasserstoff, Methyl, Methoxy, Chlor oder C₁-C₄-Alkoxy-C₁-C₂-Alkoxy bedeutet, R₁₆ und R₁₇ unabhängig voneinander je Wasserstoff, C₁-C₄-Alkyl, β-Hydroxyethyl oder β-Sulfatoethyl sind, R₁₈ Wasserstoff, C₁-C₄-Alkyl, C₁-C₄-Alkoxy-C₁-C₄-Alkyl oder Phenyl bedeutet, R₁₉ Wasserstoff, Methyl, Ethyl, β-Hydroxyethyl. β-Cyanoethyl. β-Sulfatoethyl ist und R₂₀ Acetyl, Propionyl oder einen Rest der zuvor angegebenen Formel (4) bedeutet.

K steht ausserdem bevorzugt für einen Rest der Formel 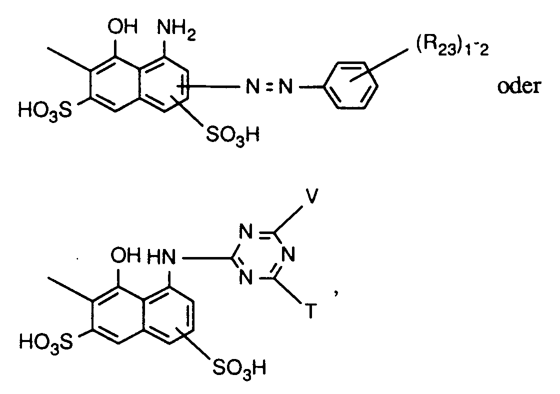 worin (R₂₃)₁₋₂ für 1 oder 2 gleiche oder verschiedene Reste aus der Gruppe Sulfo, Methyl, Methoxy und Rest -SO₂-Y, worin Y die zuvor angegebene Bedeutung hat, steht, T Chlor oder Fluor bedeutet und V Amino, N-C₁-C₄-Alkylamino oder N,N-Di-C₁-C₄-Alkylamino, wobei das Alkyl gegebenenfalls z.B. durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl gegebenenfalls z.B. durch C₁-C₄-Alkyl, C₁-C₄-Alkoxy, Amino, C₂-C₄-Alkanoylamino, Carboxy, Sulfo oder Halogen substituiert ist, ein Rest der Formel 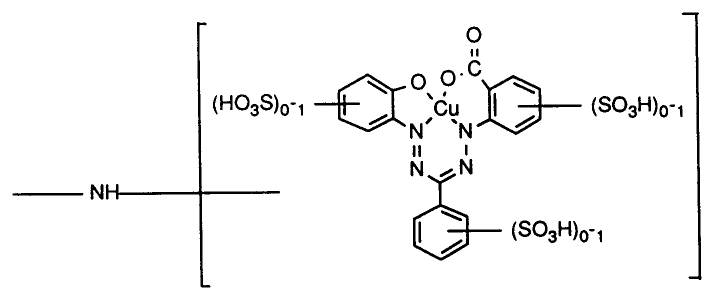 oder ein Monoazorest -(D - N=N - K₁), worin D einen Phenyl- oder 1- oder 2-Naphthylrest bedeutet, der durch 1 bis 3 Substituenten aus der Reihe Methyl, Methoxy, Chlor, Sulfo und Rest der Formel -SO₂-Y, worin Y die zuvor angegebene Bedeutung hat, substituiert ist, und K für den Rest von 1-Amino-8-hydroxynaphthalin-3,6-disulfonsäure (H-Säure), für den Rest von K-, I- oder J-Säure oder für einen Rest der zuvor angegebenen Formel (6a), (6b), (6d) oder (6e) steht, ist.

Z bedeutet einen Phenyl- oder Naphthylrest, der ausser faserreaktiven Resten die bei organischen Farbstoffen üblichen Substituenten aufweisen kann. Als solche Substituenten seien genannt z.B. C₁-C₄-Alkyl, C₁-C₄-Alkoxy, Acylaminogruppen mit 1 bis 8 Kohlenstoffatomen, insbesondere Alkanoylaminogruppen und Alkoxycarbonylaminogruppen, wie Acetylamino, Propionylamino, Methoxycarbonylamino, Ethoxycarbonylamino oder Benzoylamino, Phenylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo.

Für die in Z enthaltenen Reaktivreste der zuvor angegebenen Formel (3a) bis (3f) gelten bezüglich X₁ und Y die zuvor genannten Bedeutungen und Bevorzugungen. m₁ und m stehen unabhängig voneinander bevorzugt je für die Zahl 2, 3 oder 4, besonders bevorzugt für die Zahl 2 oder 3 und insbesondere bevorzugt je für die Zahl 2. p bedeutet vorzugsweise die Zahl 0 und q steht vorzugsweise für die Zahl 1, 2 oder 3 und besonders bevorzugt für die Zahl 1 oder 2.

Z steht bevorzugt für einen Phenylrest, der einen faserreaktiven Rest der Formel (3a) oder (3b) trägt und weiter unsubstituiert oder durch Sulfo, Methyl, Chlor, Hydroxy oder Methoxy substituiert ist, oder für einen 1- oder 2-Naphthylrest, der einen faserreaktiven Rest der Formel (3a) trägt und weiter unsubstituiert oder durch Sulfo substituiert ist.

Eine bevorzugte Ausführungsform der vorliegenden Erfindung betrifft Verbindungen der Formel (1), worin Z ein faserreaktiver Rest der Formel 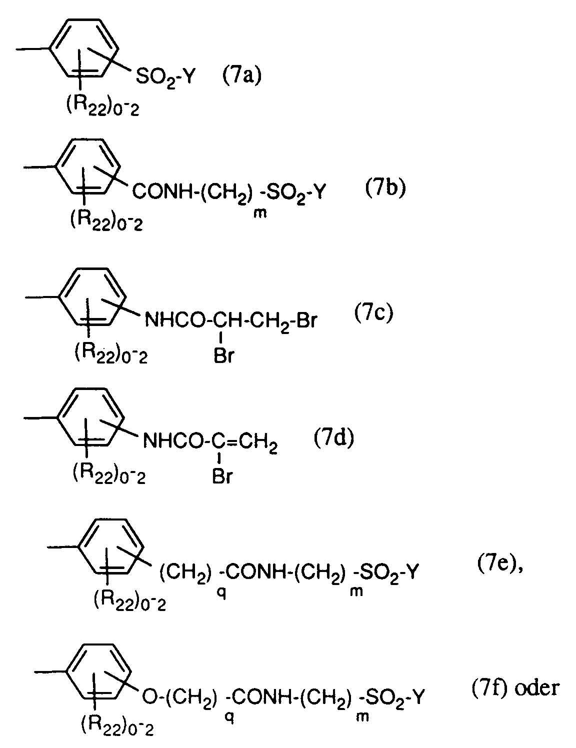 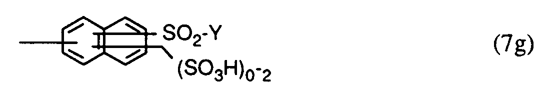 ist, worin für Y die zuvor angegebenen Bedeutungen und Bevorzugungen gelten, (R₂₂)₀₋₂ für 0 bis 2 gleiche oder verschiedene Reste aus der Gruppe Methyl, Methoxy, Chlor, Hydroxy und Sulfo steht, q die Zahl 1 oder 2 und m die Zahl 2 oder 3 bedeutet.

Besonders bevorzugt bedeutet Z einen Rest der Formel 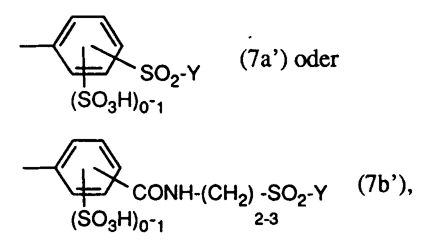 worin Y Vinyl oder β-Sulfatoethyl ist.

Die Verbindungen der Formel (1) weisen mindestens zwei, vorzugsweise zwei bis acht und besonders bevorzugt drei bis sechs Sulfo- oder Sulfatogruppen auf; diese können jeweils in Form der freien Säure oder vorzugsweise in Salzform, z.B. als Na-, Li-, K- oder Ammoniumsalz, vorliegen. Die Verbindungen der Formel (1) können auch als Mischsalz, z.B. als Na/Li- oder Na/Li/Ammoniumsalz, vorliegen.

Die Verbindungen der Formel (1) sind faserreaktiv. Unter faserreaktiven Resten sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Das Verfahren zur Herstellung der Reaktivfarbstoffe der Formel (1) ist dadurch gekennzeichnet, dass man eine Verbindung der Formel 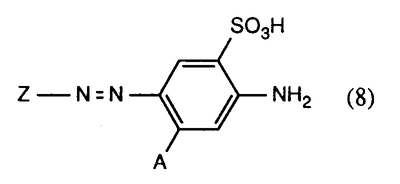 worin A und Z die unter der Formel (1) definierte Bedeutung haben diazotiert und mit einer der Kupplungskomponenten K-H kuppelt und gegebenenfalls eine weitere Umwandlungsreaktion anschliesst, z.B. das nach der Kupplung entstandene Zwischenprodukt wiederum diazotiert unt mit einer weiteren Kupplungskomponente aus der definierten Gruppe K kuppelt und gegebenenfalls weiter umsetzt, oder das Zwischenprodukt mit einer weiteren Diazokomponente kuppelt.

Eine weitere Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion.

Ausserdem können Eliminierungsreaktionen an die Synthese angeschlossen werden. Beispielsweise kann man Reaktivfarbstoffe der Formel (1) welche Sulfatoethylsulfonylreste enthalten, mit halogenwasserstoffabspaltenden Mitteln, wie Natriumhydroxid, behandeln, wobei die Sulfatoethylsulfonylreste in Vinylsulfonylreste übergehen.

Die Verbindungen der Formel (8) sind ebenfalls faserreaktiv und neu. Einen weiteren Gegenstand der Erfindung stellen daher Verbindungen der Formel 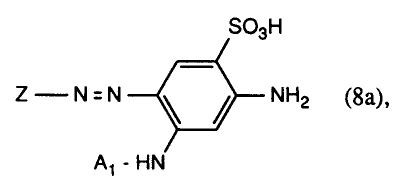 worin für A₁ und Z die zuvor angegebenen Bedeutungen und Bevorzugungen gelten, dar.

Die Verbindungen der Formel (8) bzw. (8a) können erhalten werden, z.B. indem man eine Verbindung der Formel

Z - NH₂ (9)

in üblicher Weise diazotiert und mit einer Verbindung der Formel 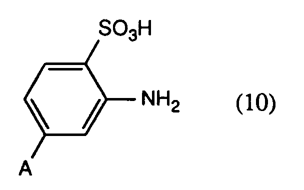 kuppelt, worin A und Z jeweils die zuvor angegebene Bedeutung haben. Die Verbindungen der Formeln (9) und (10) sind bekannt oder können in an sich bekannter Weise hergestellt werden.

Die Reaktivfarbstoffe der Formel (1) sowie die Verbindungen der Formel (8) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit, Reibechtheit und insbesondere Chlorechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anderes vermerkt. Gewichtsteile stehen zu Volumenteilen im Verhältnis von Kilogramm zum Liter.

Die wichtigsten Verfahrensvarianten sind in den Ausführungsbeispielen dargestellt.

### Herstellung der Zwischenprodukte der Formel (8):

Beispiel 1: 44,8 Teile 2-Naphthylamino-1-sulfosäure werden in 400 Teilen Wasser neutral gelöst und die Lösung auf 0 - 5°C abgekühlt. Bei dieser Temperatur werden 28,3 Teile 2,4,6-Trifluor-1,3,5-triazin innerhalb von 20 Minuten zugetropft, wobei der pH der Reaktionslösung durch gleichzeitige Zugabe von Natriumhydroxydlösung bei 7 gehalten wird. Nach Zusatz einer neutralen Mischung aus 37,9 Teilen 1,3-Phenylendiamin-4-sulfosäure in 300 Teilen Wasser wird die Reaktionsmischung 1 Stunde bei 0 - 2°C und pH-Wert von 7 bis 8 kondensiert. Anschliessend wird die Temperatur innerhalb von ca. 2 Std. auf 20 - 25°C erhöht. Nach vollständiger Reaktion werden 56,2 Teile diazotiertes 1-Amino-4-(2-sulfatoethyl-sulfonyl)-benzol zugegeben und bei 0 - 10°C und pH 4 bis 5 gekuppelt. Nach 1 Std. Rühren bei 5 - 20°C und pH 7 erhält man den Farbstoff der Formel:

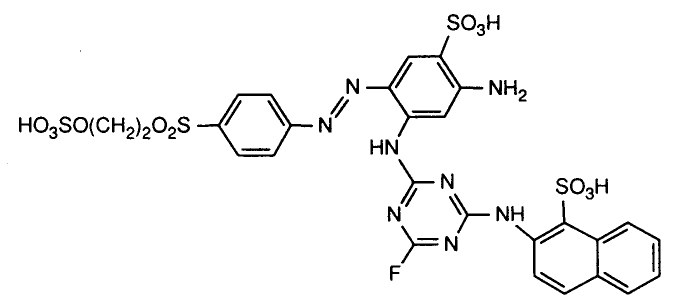

Er färbt Baumwolle in gelben Tönen.

Beispiele 2-30q: Analog wie im Beispiel 1 beschrieben lassen sich die folgenden Verbindungen herstellen, die Baumwolle als Farbstoffe jeweils in einer gelben Nuance färben:

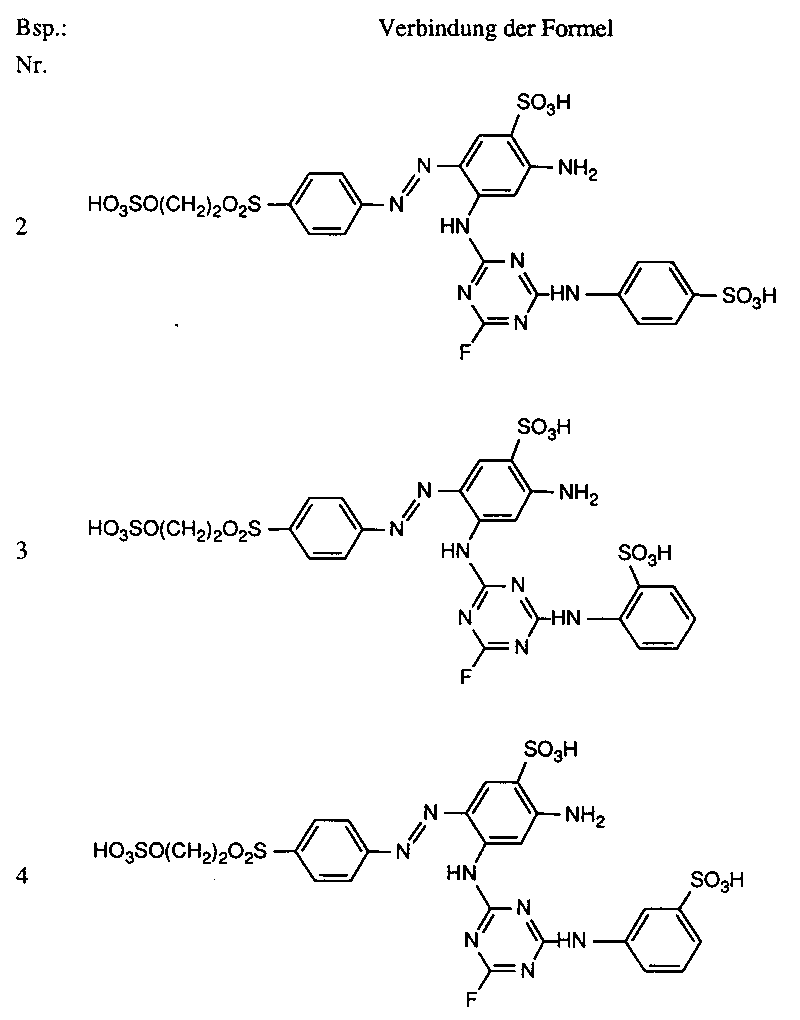

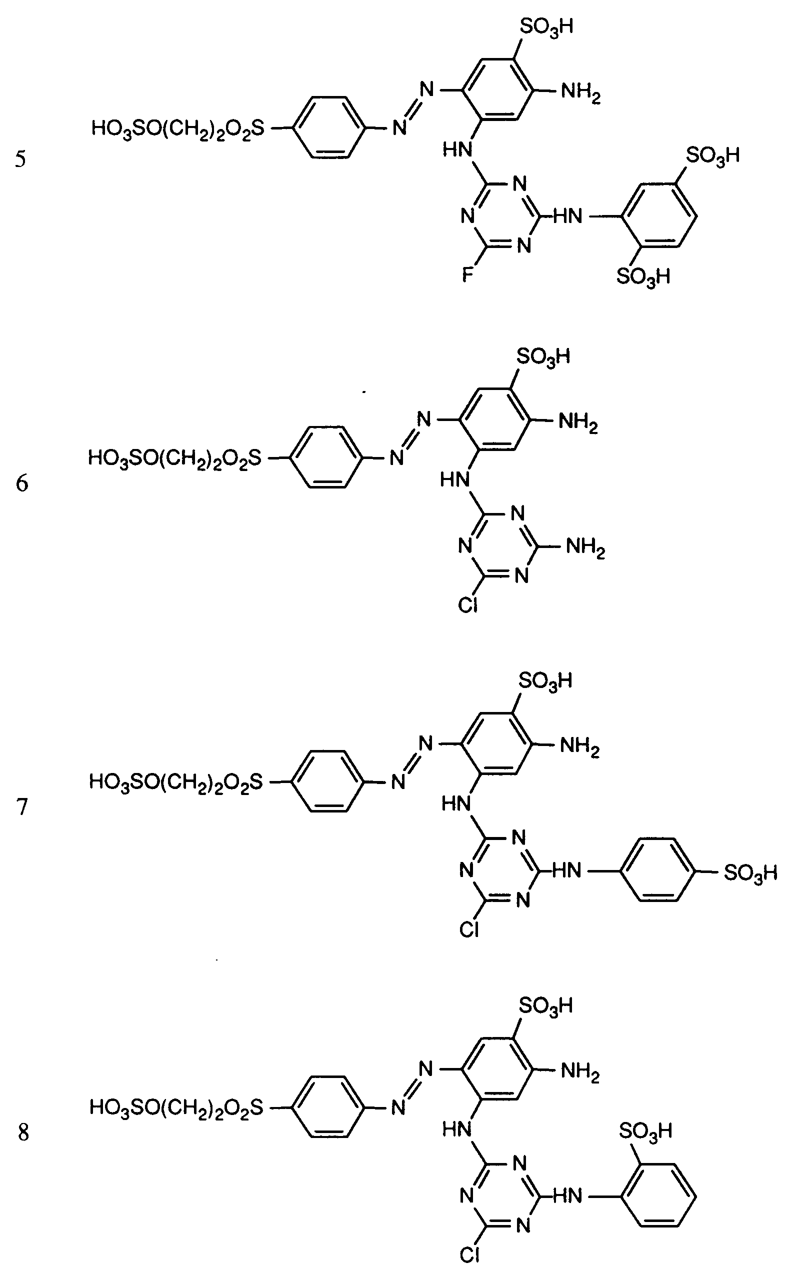

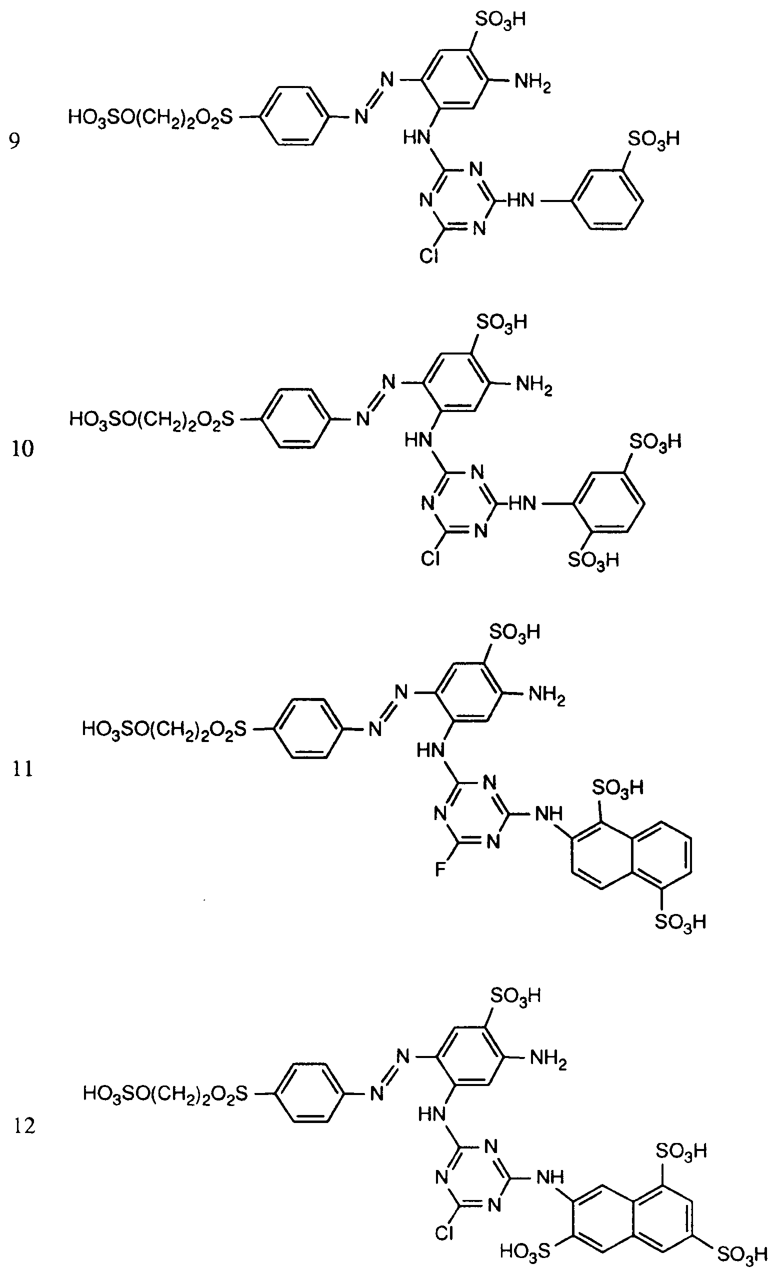

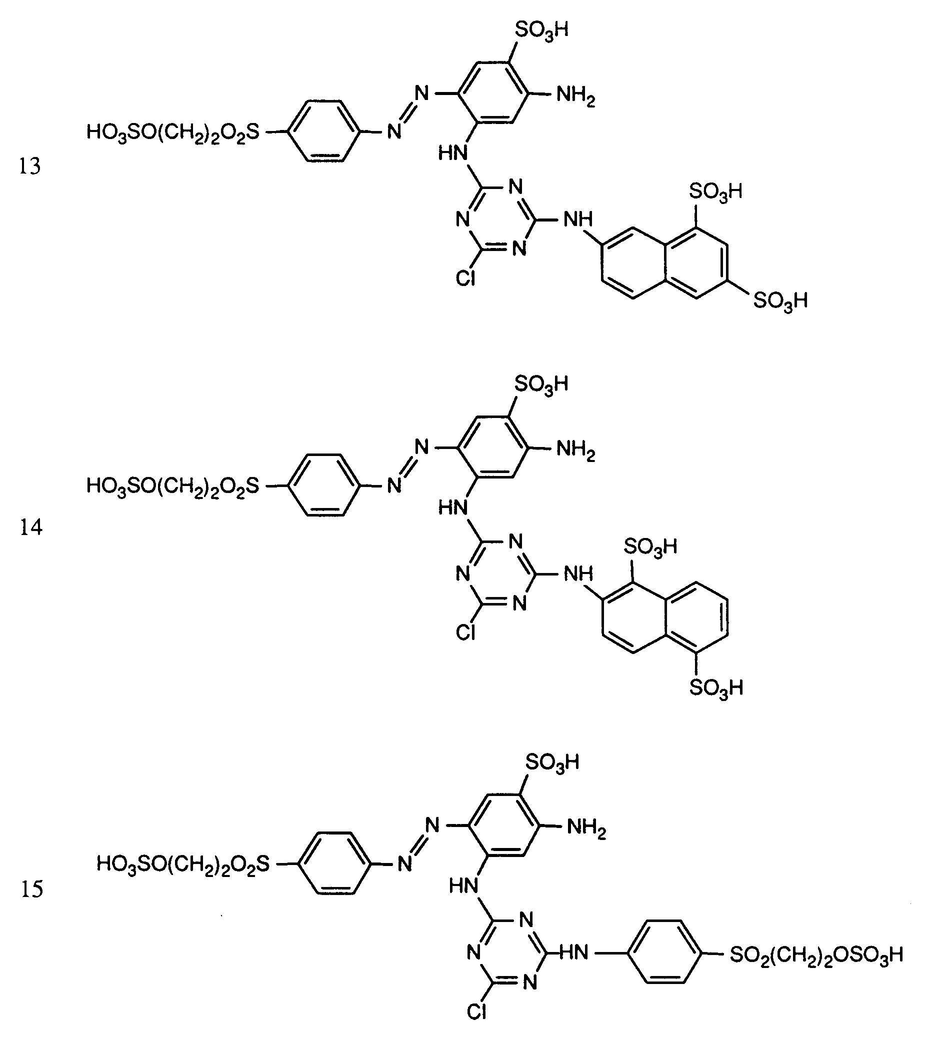

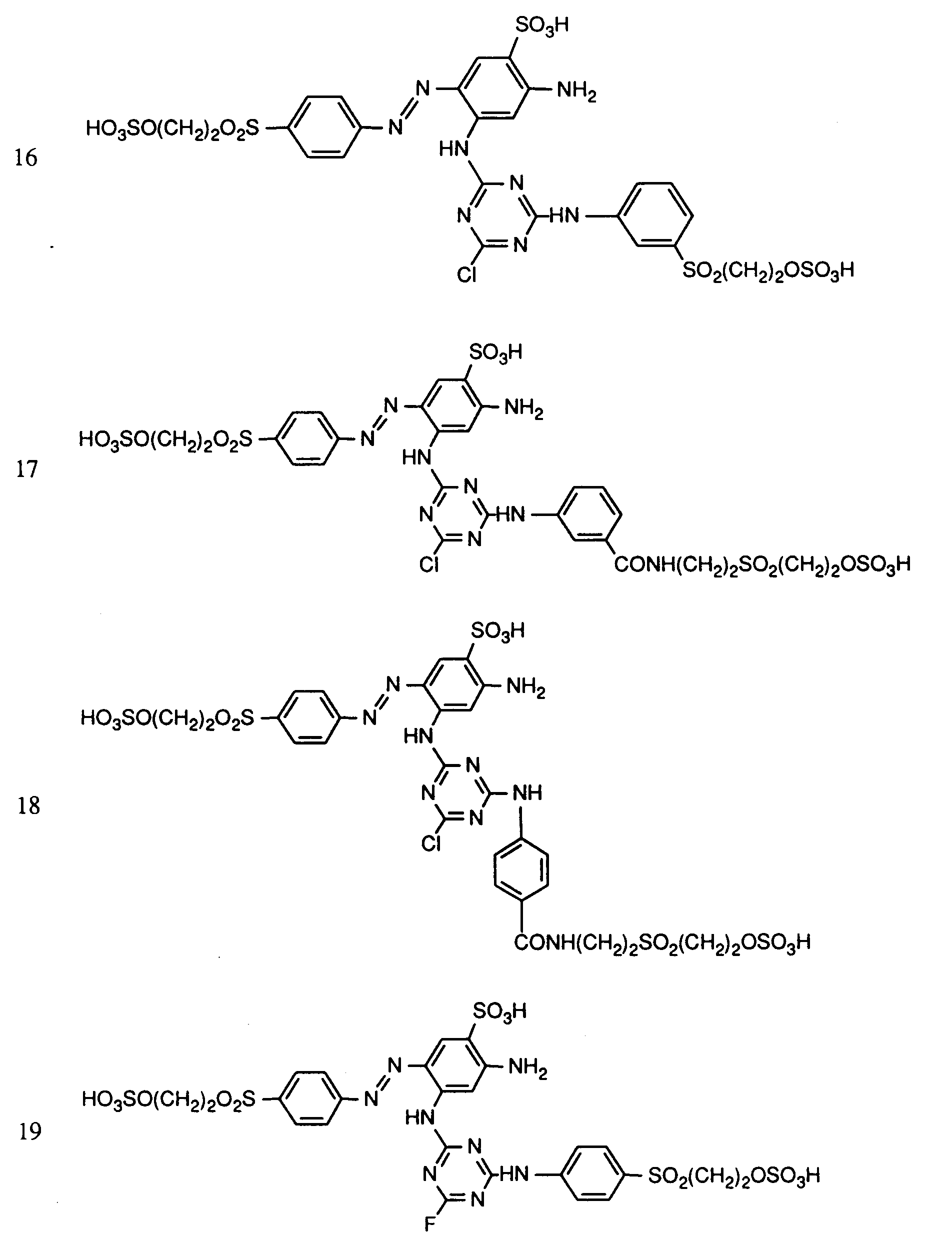

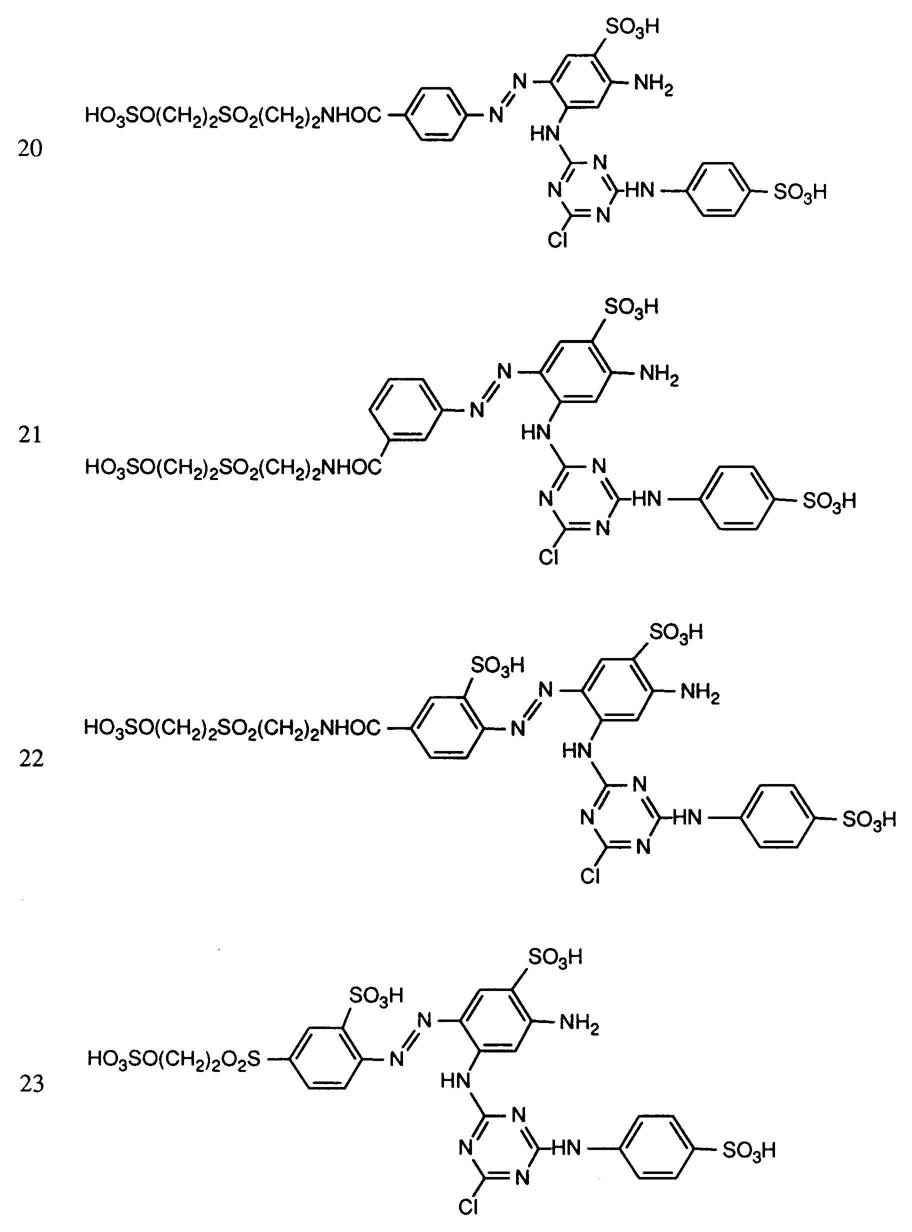

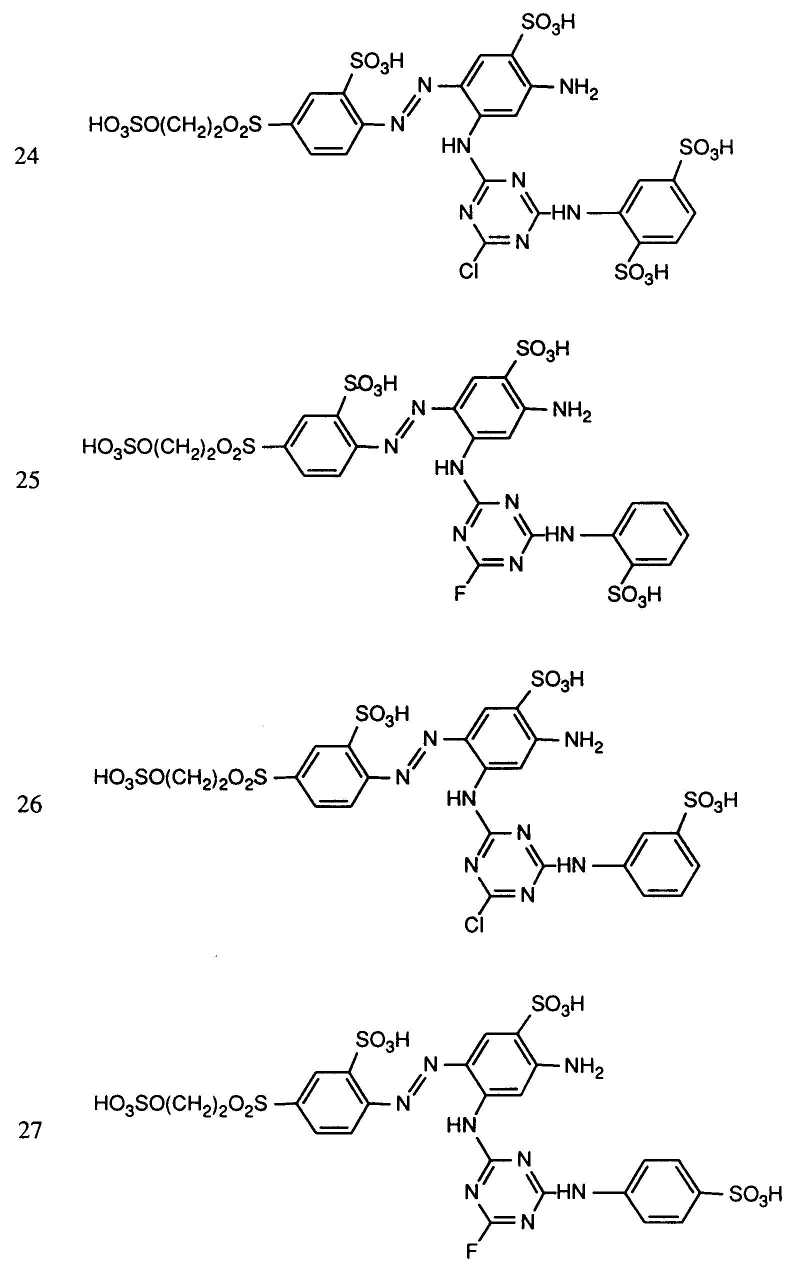

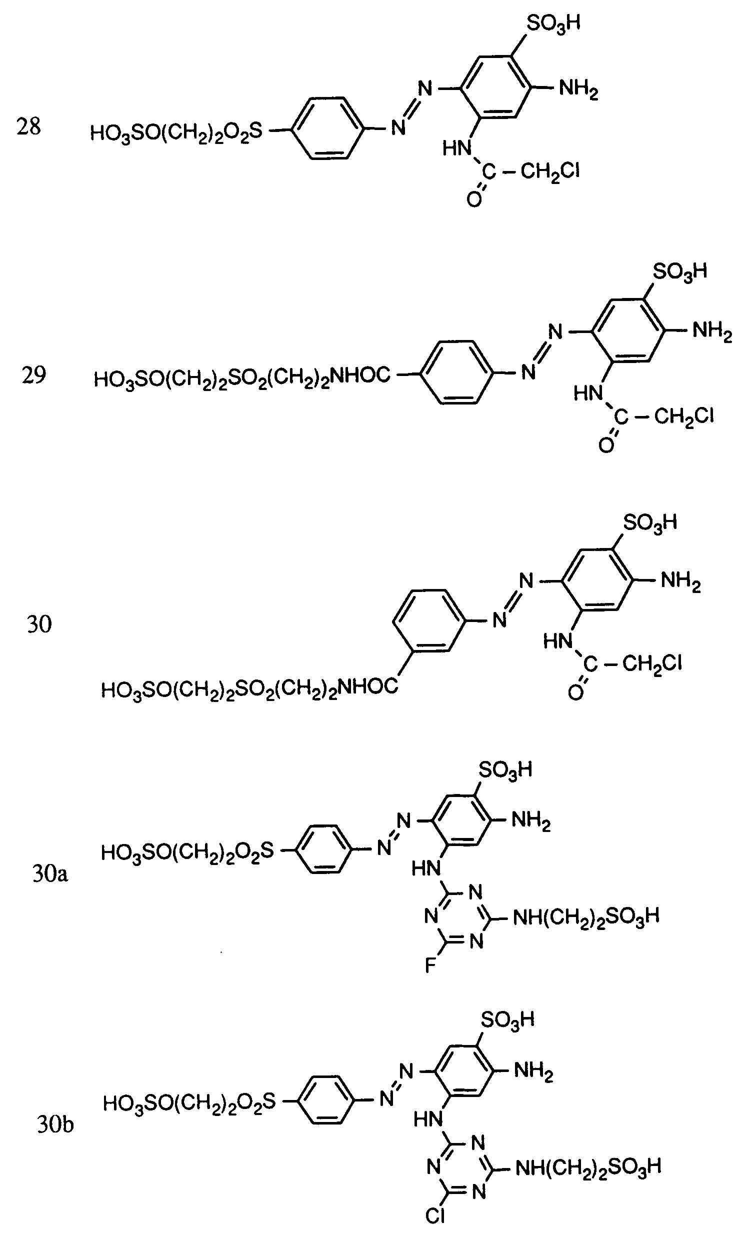

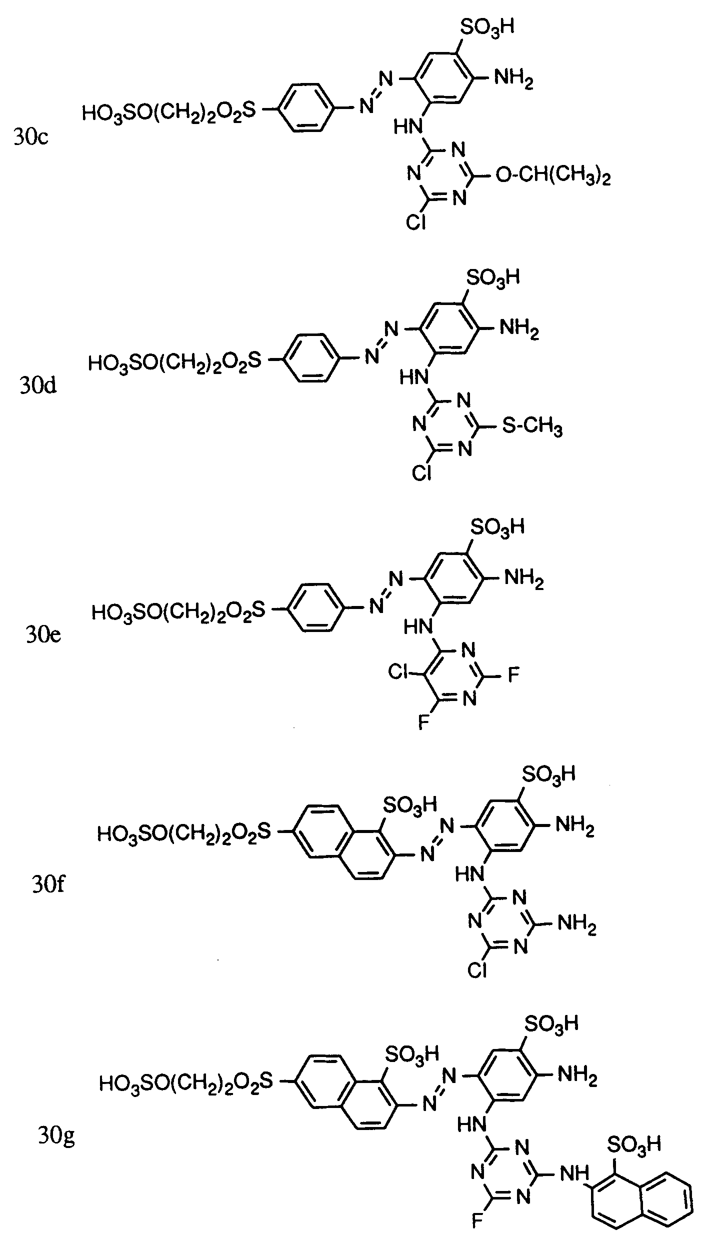

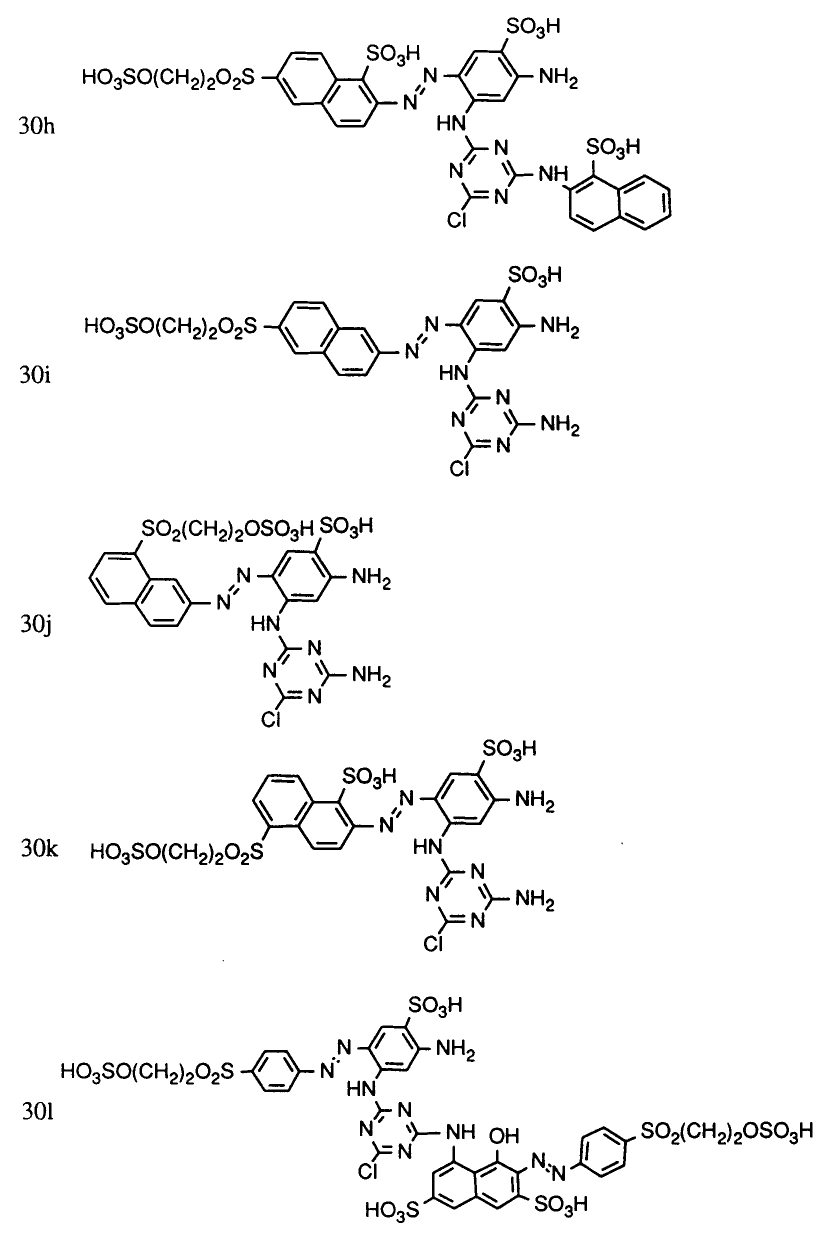

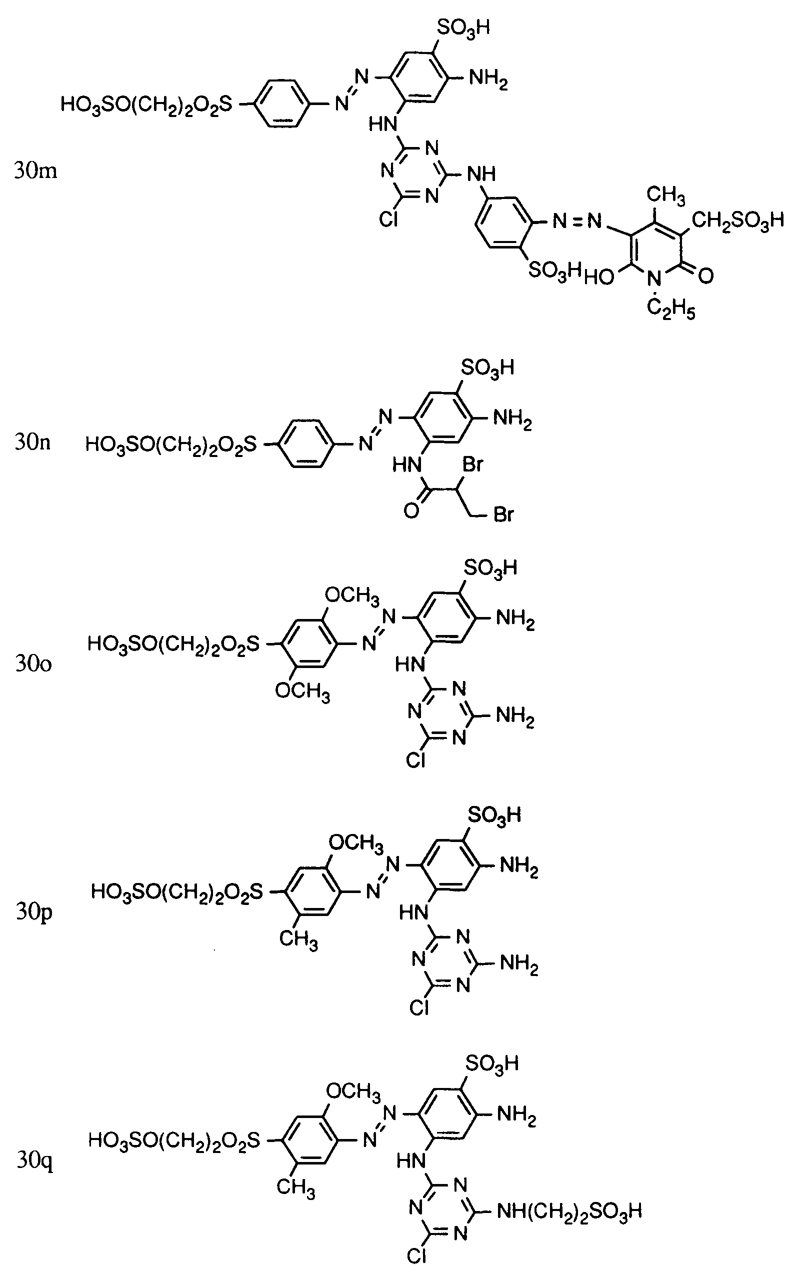

### Herstellung der Farbstoffe der Formel (1):

Beispiel 31: 8,6 Teile der Verbindung gemäss Beispiel 1 werden mit Natriumnitrit und Salzsäure in üblicher Weise diazotiert und auf 2,1 Teile m-Sulfonyl-methyl-pyrazolidin neutral gekuppelt. Nach vollständiger Kupplungsreaktion wird die Reaktionslösung umkehrosmotisiert und gefriergetrocknet. Man erhält den Farbstoff der Formel:

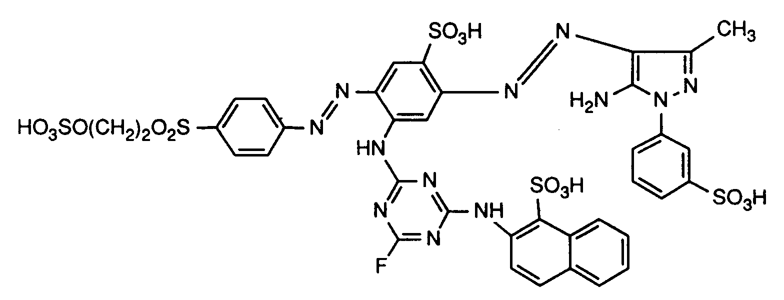

Er färbt Baumwolle in scharlach Tönen mit guten Allgemeinechtheiten.

Beispiele 32-80: Analoge Farbstoffe werden erhalten, wenn man die in der Tabelle genannten Diazokomponenten und Kupplungskomponenten wie im Beispiel 31 beschrieben miteinander umsetzt. Diese färben Baumwolle in der angegebenen Nuance mit guten Allgemeinechtheiten.

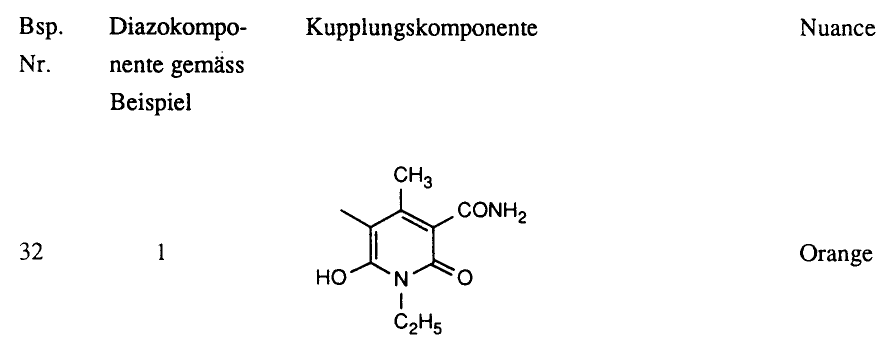

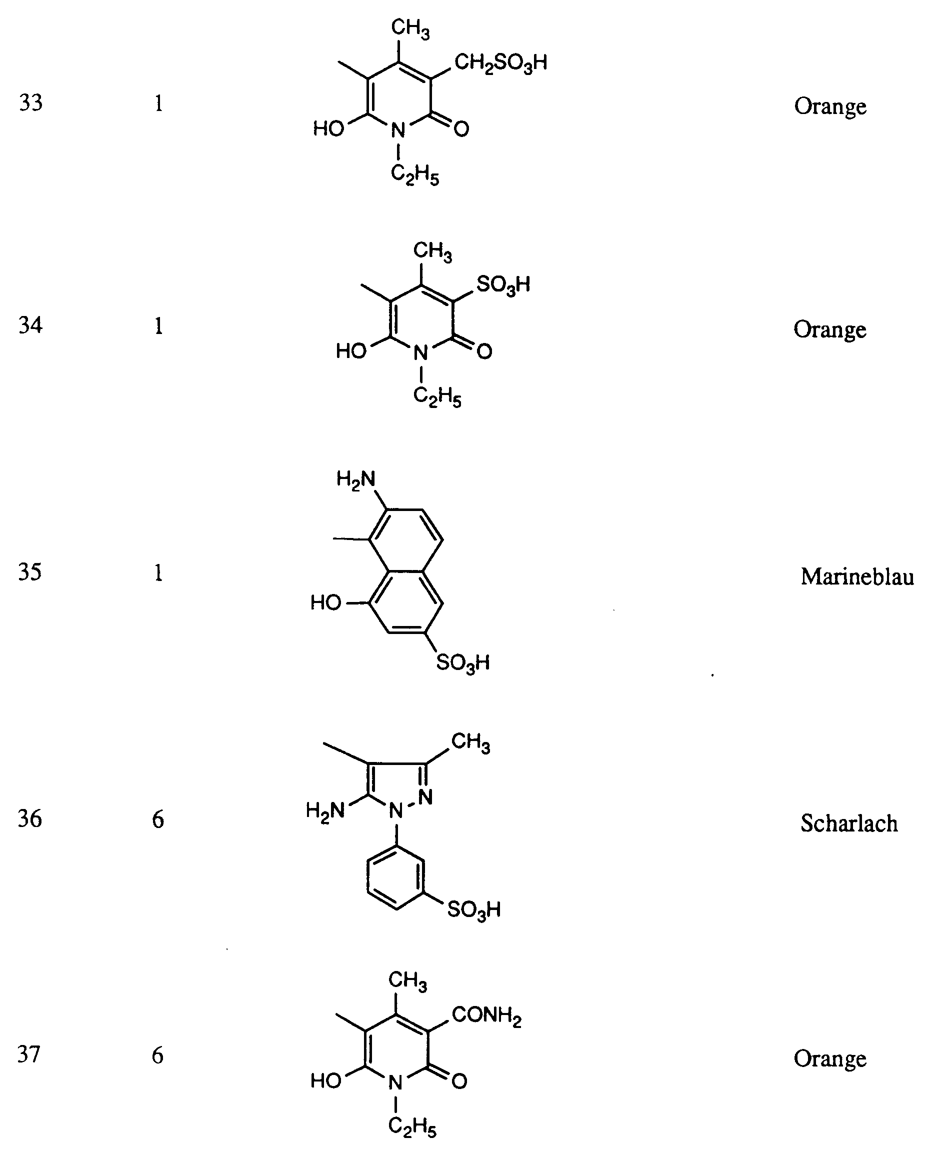

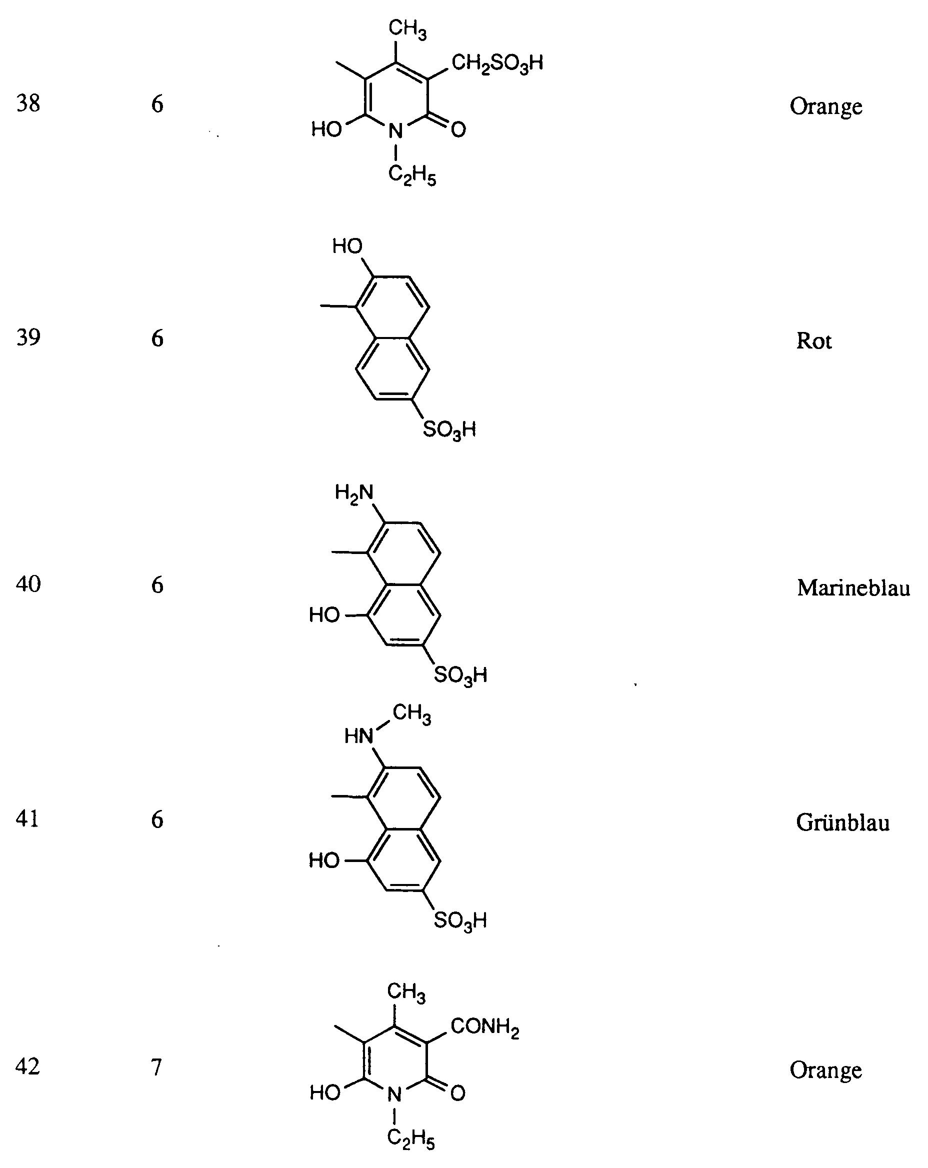

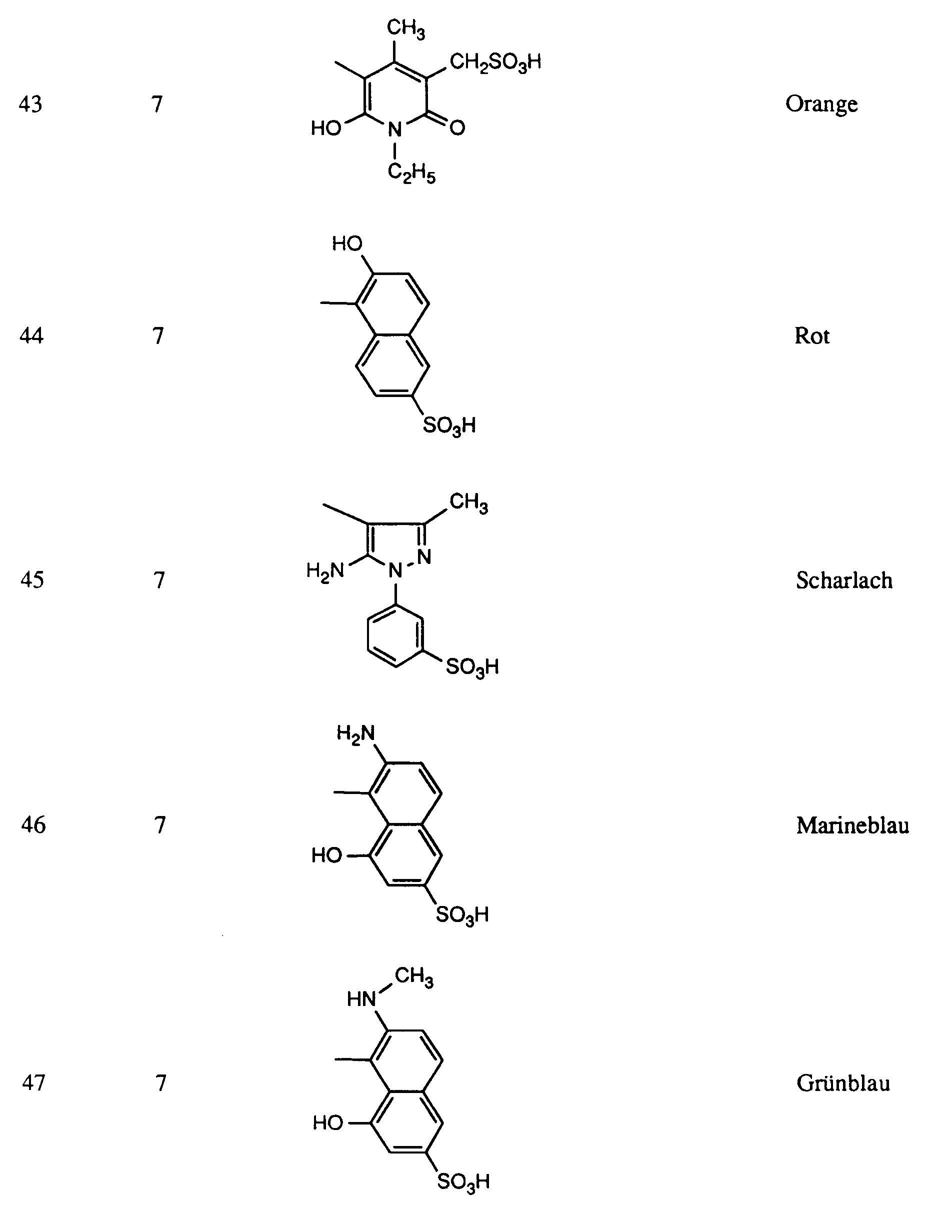

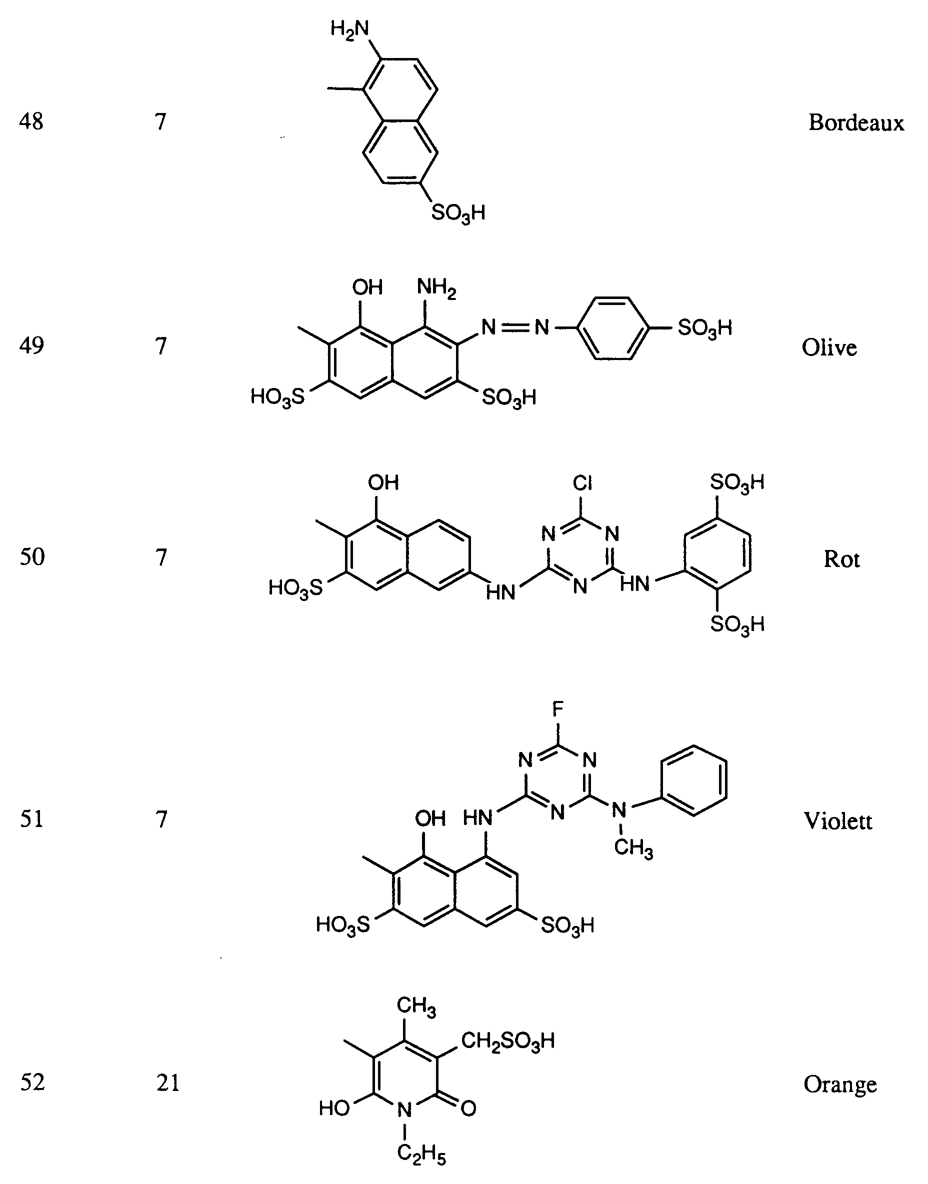

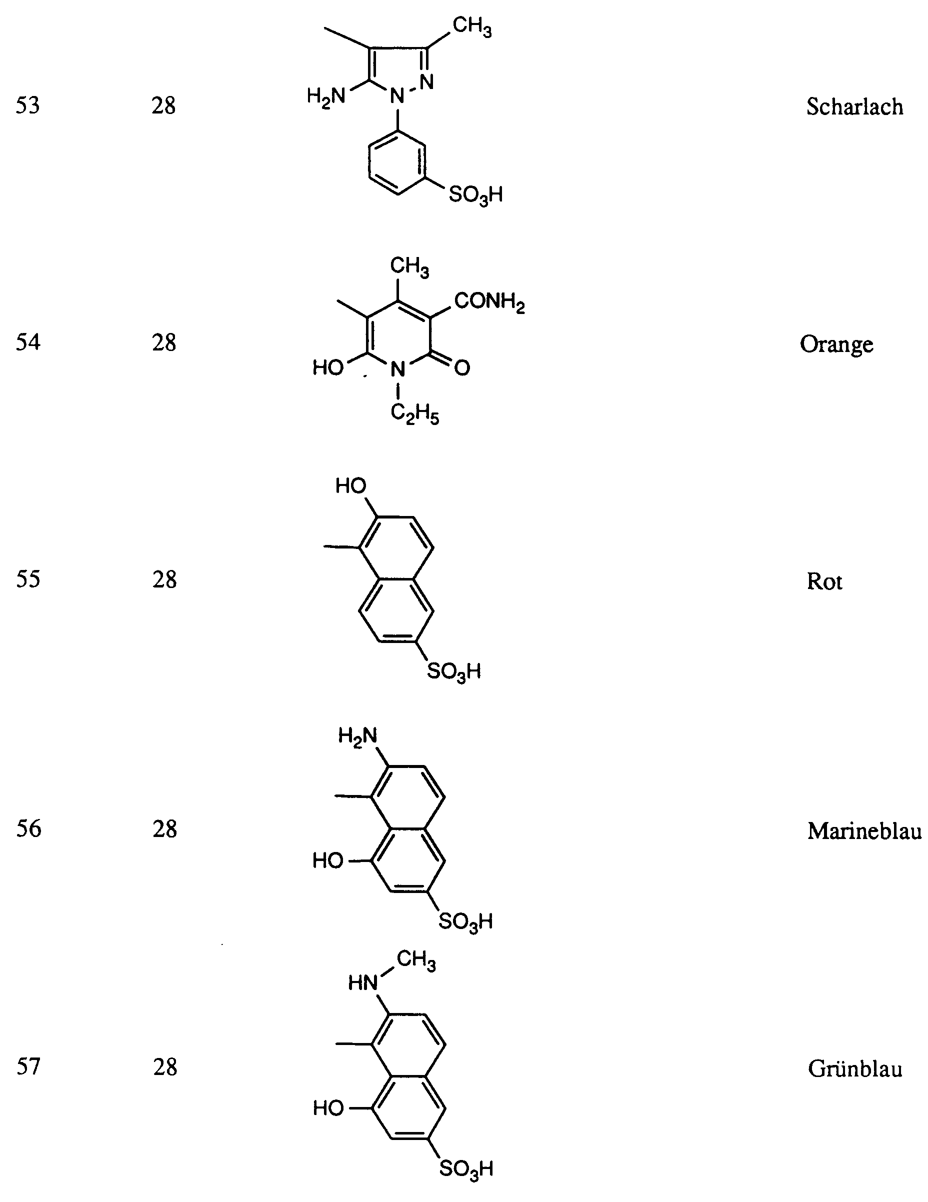

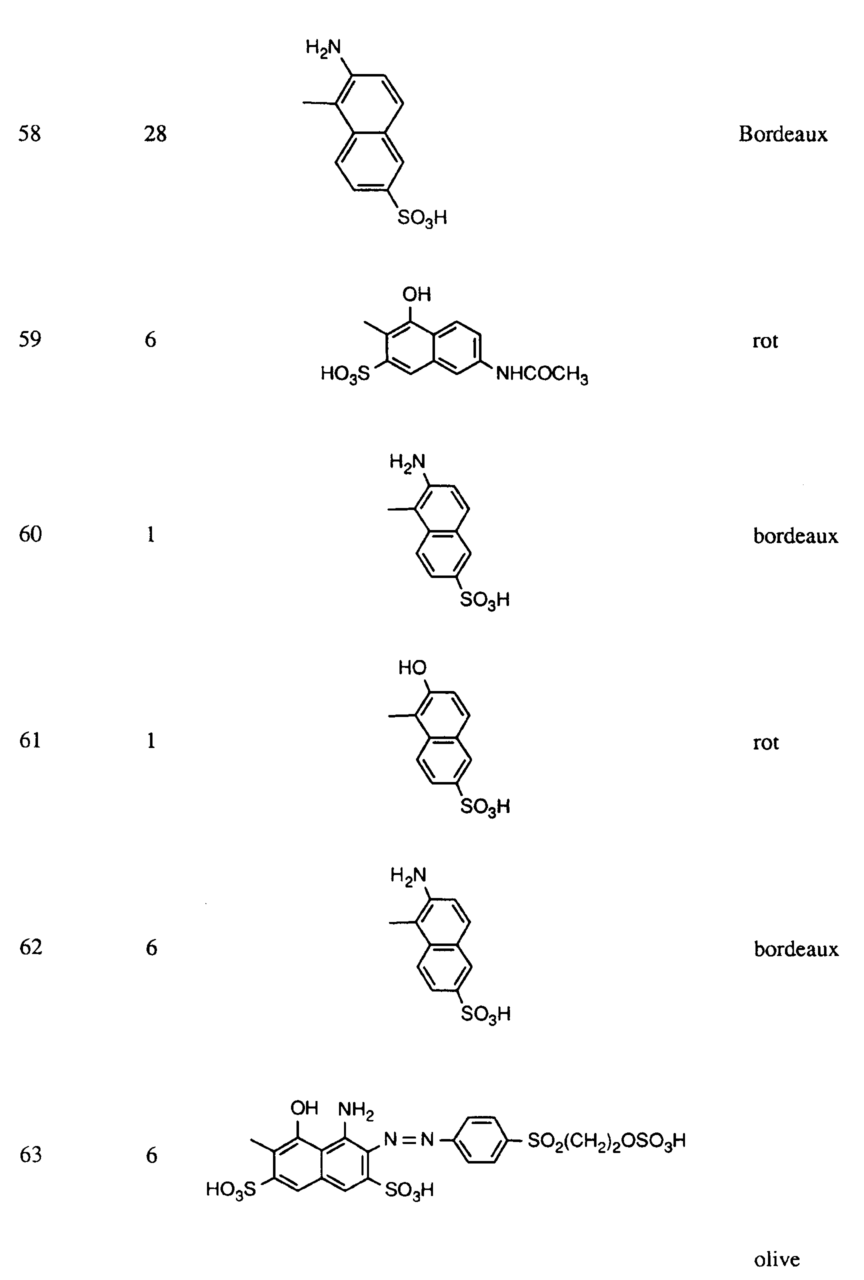

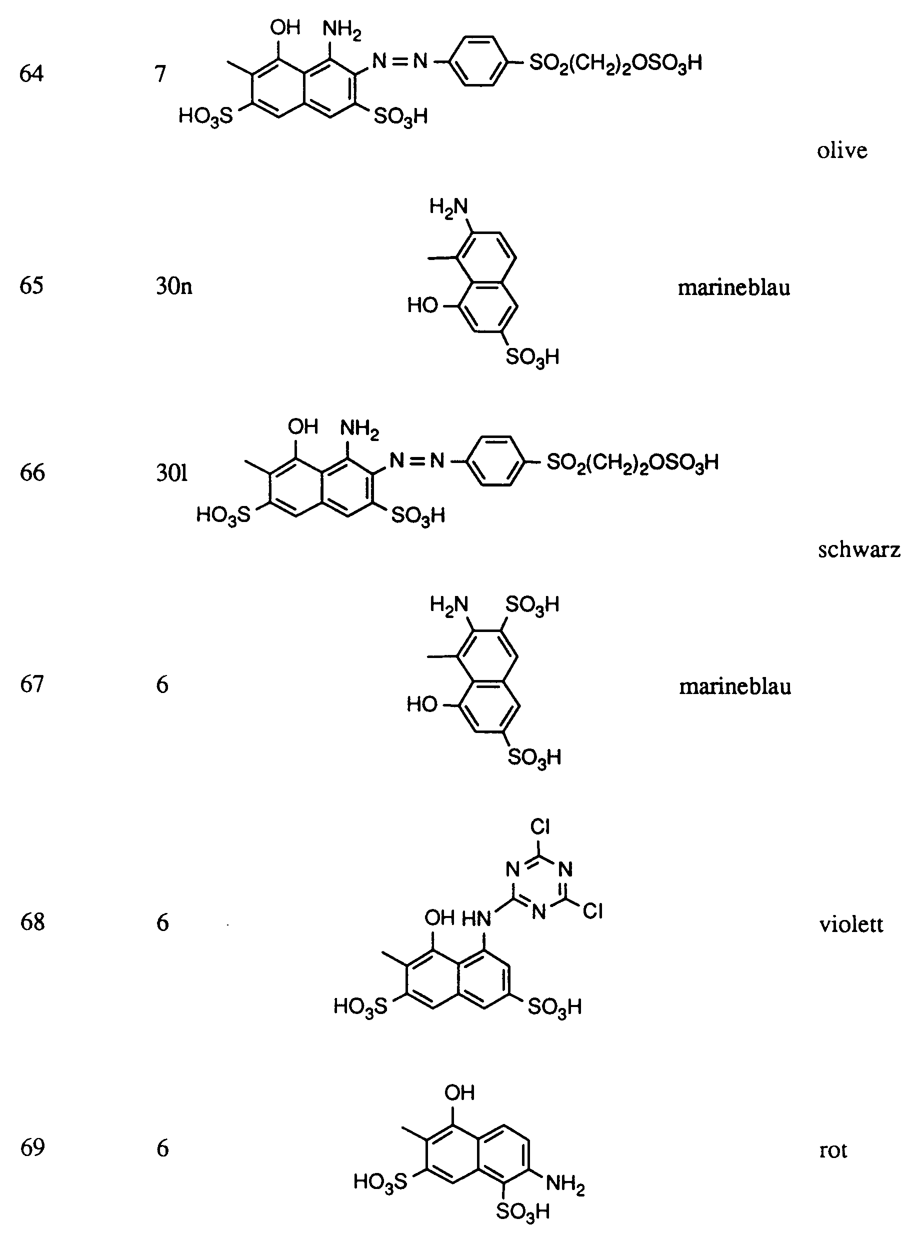

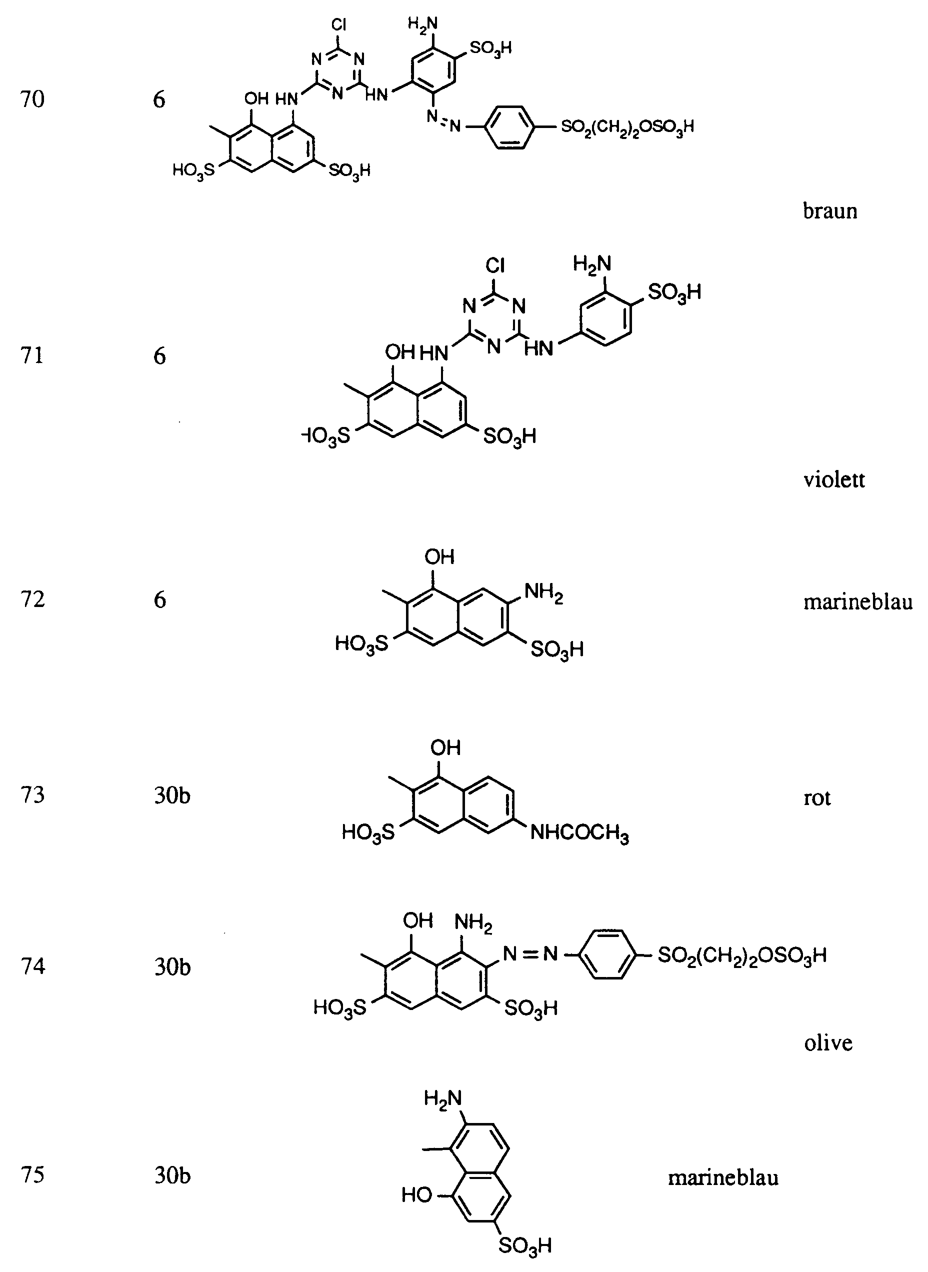

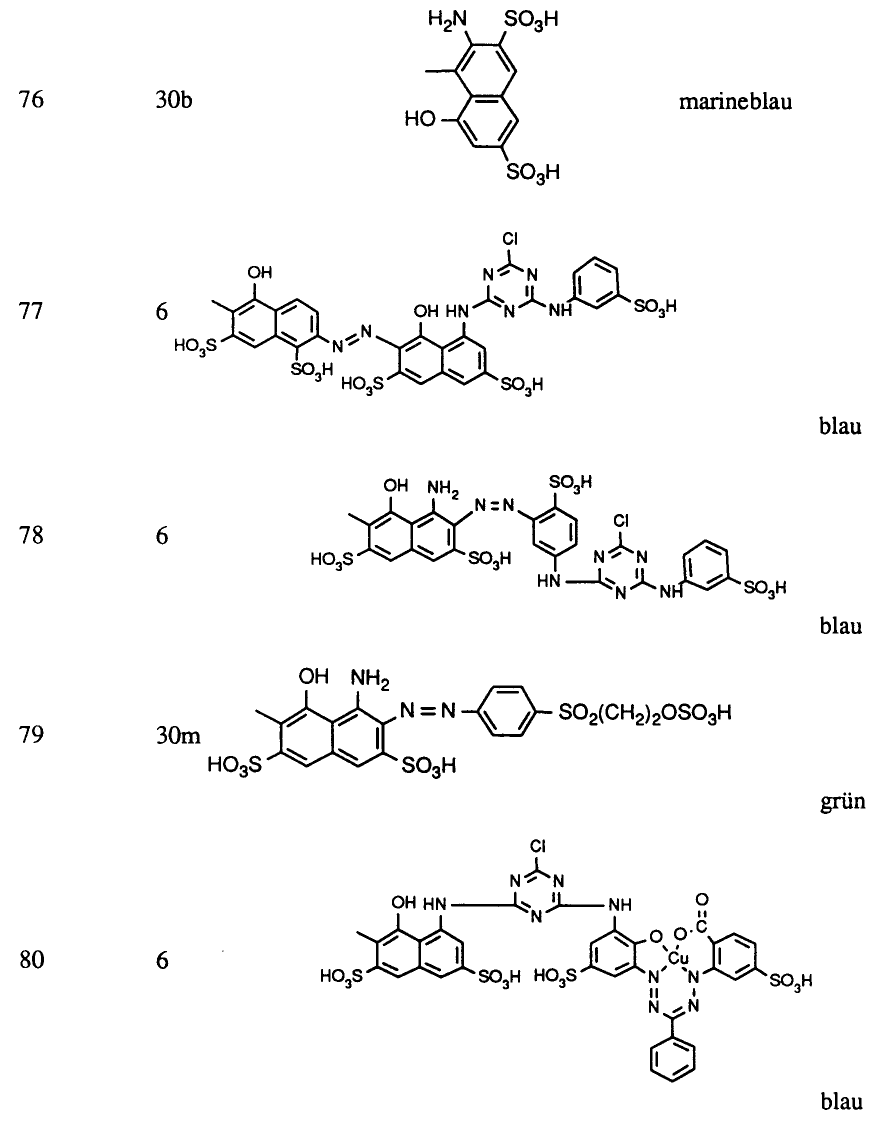

### Färbevorschrift I

2 Teile des gemäss Beispiel 31 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Beispiel 31 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Beispiel 31 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Beispiel 31 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Beispiel 31 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Beispiel 31 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I: 3 Teile des gemäss Beispiel 31 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 31 erhaltenen Reaktivfarbstoffes werden unter schnellem Rühren in 100 Teile einer Stammverdickung, enthaltend 50 Teile 5%ige Natriumalginverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 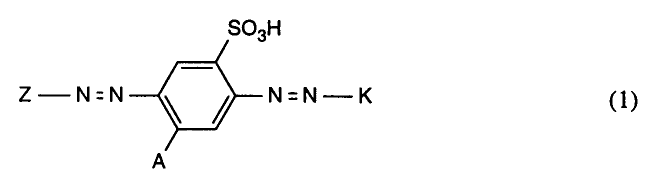 worin
A einen faserreaktiven Rest -NR'-A₁ bedeutet,
R' Wasserstoff oder C₁-C₄-Alkyl ist,
A₁ für einen Halopyrimidinyl-, Halochinoxalincarbonyl- oder Triazinylrest oder für einen Rest der Formel
-CO-CH₂-X (2a)
-CO-(CH₂)ₙ-SO₂-Y (2b),
-COCHX₁-CH₂X₁ (2c) oder
-COCX₁=CH₂ (2d) steht,
worin Y Vinyl oder einen Rest -CH₂-CH₂-U bedeutet und U eine Abgangsgruppe ist, X und X₁ unabhängig voneinander je Chlor oder Brom sind und n eine ganze Zahl 1 bis 6 bedeutet, steht,
K der Rest einer Kupplungskomponente ist, und
Z für den Rest einer Diazokomponente der Benzol- oder Naphthalinreihe steht, welche mindestens einen faserreaktiven Rest der Formel
-SO₂-Y (3a),
-CONH-(CH₂)ₘ-SO₂-Y (3b),
-CONH-(CH₂)ₘ₁-O-(CH₂)ₘ-SO₂-Y (3c),
-(O)ₚ-(CH₂)_{q}-CONH-(CH₂)ₘ-SO₂-Y (3d),
-NH-CO-CHX₁-CH₂X₁ (3e) oder
-NH-CO-CX₁=CH₂ (3f)
worin X₁ und Y jeweils die oben angegebene Bedeutung haben, p die Zahl 0 oder 1 und m, m₁ und q unabhängig voneinander je eine ganze Zahl von 1 bis 6 bedeuten, trägt, mit der Massgabe, dass
K nicht 5,7-Disulfo-2-amino-naphth-1-yl bedeutet, wenn A₁ ein Triazinylrest ist und Z für einen Phenylrest steht, welcher einen faserreaktiven Rest der Formel (3a) trägt, worin Y Vinyl oder einen Rest -CH₂-CH₂-U bedeutet und U Sulfato oder Chlor ist.

2. Verbindungen gemäss Anspruch 1, dadurch gekennzeichnet, dass A₁ einen Triazinylrest der Formel 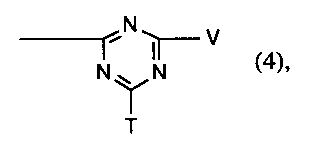 bedeutet, worin T Chlor, Fluor, Brom, 3-Carboxypyridin-1-yl, 3-Carbamoylpyridin-1-yl oder ein Reaktivrest der Formel 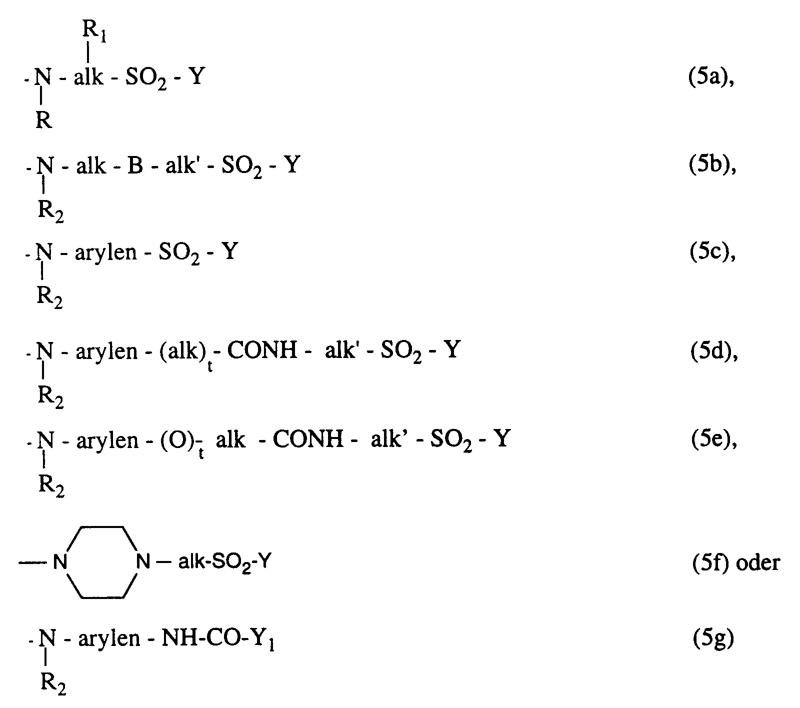 ist,
R Wasserstoff, gegebenenfalls durch Hydroxy, Sulfo, Sulfato, Carboxy oder Cyano substituiertes C₁-C₄-Alkyl oder einen Rest 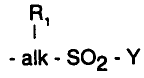 bedeutet,
R₁ Wasserstoff, Hydroxy, Sulfo, Sulfato, Carboxy, Cyano, Halogen,
C₁-C₄-Alkoxycarbonyl, C₂-C₅-Alkanoyloxy, Carbamoyl oder die Gruppe - SO₂-Y ist,
R₂ für Wasserstoff oder C₁-C₄-Alkyl steht,
alk und alk' unabhängig voneinander C₁-C₆-Alkylen sind,
arylen einen unsubstituierten oder durch Sulfo, Carboxy, Hydroxy, C₁-C₄-Alkyl,
C₁-C₄-Alkoxy oder Halogen substituierten Phenylen- oder Naphthylenrest bedeutet
Y₁ für eine Gruppe -CHX₁-CH₂X₁ oder -CX₁=CH₂ steht und X₁ Chlor oder Brom bedeutet,
B den Rest -O- oder -NR₂- bedeutet, und
t für die Zahl 0 oder 1 steht, und
V unabhängig die Bedeutung von T hat oder für einen nicht-reaktiven Rest aus der Gruppe Hydroxy, C₁-C₄-Alkoxy, Phenoxy, C₁-C₄-Alkylthio, Morpholino und gegebenenfalls substituiertes Amino steht.

3. Verbindungen gemäss Anspruch 1 oder 2, dadurch gekennzeichnet, dass Y Vinyl, β-Chlorethyl, β-Sulfatoethyl, β-Thiosulfatoethyl, β-Acetoxyethyl, β-Phenoxyethyl oder β-Phosphatoethyl, vorzugsweise β-Sulfatoethyl oder Vinyl bedeutet.

4. Verbindungen gemäss Anspruch 2, dadurch gekennzeichnet, dass T Chlor oder Fluor ist und V C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, durch 1 bis 3 Sulfogruppen substituiertes 2-Naphthylamino oder einen Reaktivrest der Formel (5a) bis (5g) bedeutet.

5. Verbindungen gemäss einem der Ansprüche 2 bis 4, dadurch gekennzeichnet, dass V Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, oder durch 1 bis 3 Sulfogruppen substituiertes 2-Naphthylamino bedeutet.

6. Verbindungen gemäss einem der Ansprüche 2 bis 5, dadurch gekennzeichnet, dass V Amino, N-Methylamino, N-Ethylamino, β-Sulfoethylamino, Phenylamino, 2-, 3- oder 4-Sulfophenylamino, 2,4- oder 2,5-Disulfophenylamino, Mono-, Di- oder Trisulfo-2-naphthylamino, N-C₁-C₂-Alkyl-N-phenylamino oder Morpholino bedeutet.

7. Verbindungen gemäss einem der Ansprüche 2 bis 4, dadurch gekennzeichnet, dass V einen Reaktivrest der Formel (5a) bis (5g) bedeutet, worin R, R₁ und R₂ je Wasserstoff, B der Rest -O- oder -NH- , alk und alk' unabhängig voneinander je Ethylen oder Propylen, arylen unsubstituiertes oder durch Methyl, Methoxy, Chlor, Hydroxy, Carboxy oder Sulfo substituiertes Phenylen, Y Vinyl oder β-Sulfatoethyl, Y₁ -CHBr-CH₂Br oder -CBr=CH₂ und t die Zahl 0 bedeuten.

8. Verbindungen gemäss einem der Ansprüche 2 bis 4 oder 7, dadurch gekennzeichnet, dass V einen faserreaktiven Rest der Formel 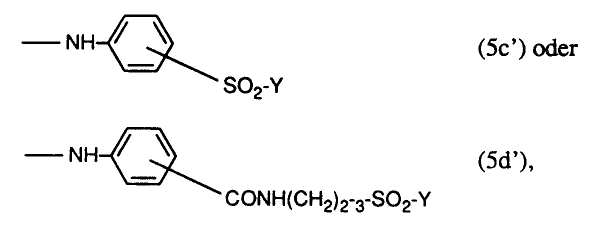 worin Y Vinyl oder β-Sulfatoethyl ist, bedeutet.

9. Verbindungen gemäss Anspruch 1, dadurch gekennzeichnet, dass A₁ für einen Rest der Formel (2a) bis (2d) steht, worin X Chlor, X₁ Brom, Y Vinyl oder β-Sulfatoethyl und n die Zahl 2, 3 oder 4 bedeutet.

10. Verbindungen gemäss einem der Ansprüche 1 bis 9, dadurch gekennzeichnet, dass K den Rest eines Aminobenzols, Phenols, Naphthylamins, Naphthols, Pyrazolons, Pyridons oder Pyrimidins bedeutet.

11. Verbindungen gemäss einem der Ansprüche 1 bis 10, dadurch gekennzeichnet, dass K für einen 1- oder 2-Naphtholrest, der gegebenenfalls durch Sulfo oder einen Rest -SO₂-Y, worin Y die im Anspruch 1 angegebene Bedeutung hat, substituiert ist; für einen 1- oder 2-Naphthylaminrest, der gegebenenfalls durch Hydroxy, Sulfo oder einen Rest -SO₂-Y, worin Y die im Anspruch 1 angegeben Bedeutung hat, substituiert ist; oder für einen Rest der Formel 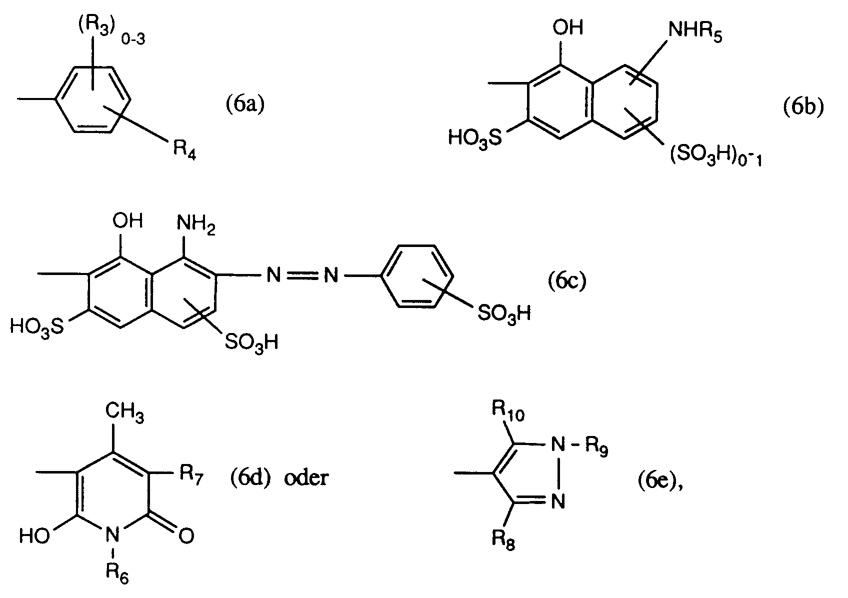 worin
(R₃)₀₋₃ 0 bis 3 Reste aus der Gruppe C₁-C₄-Alkyl, C₁-C₄-Alkoxy, Halogen,
C₁-C₄-Alkoxy-C₁-C₂-Alkoxy, Hydroxy, Hydroxy-C₁-C₂-Alkoxy, C₂-C₅-Alkanoyloxy,
C₁-C₄-Alkylsulfonyl, C₂-C₅-Alkanoylamino, N-C₁-C₄-Alkylsulfamoyl und Sulfo bedeutet,
R₄ Hydroxy, C₁-C₄-Alkoxy oder ein Rest -NR₁₁R₁₂ ist und R₁₁ und R₁₂ unabhängig voneinander Wasserstoff, C₂-C₅-Alkanoyl oder gegebenenfalls durch Hydroxy, Sulfo oder Sulfato substituiertes C₁-C₄-Alkyl bedeuten,
R₅ für Wasserstoff, C₂-C₅-Alkanoyl, Benzoyl oder für einen Rest der im Anspruch 2 angegebenen Formel (4) steht,
R₆ C₁-C₄-Alkyl bedeutet,
R₇ Carbamoyl, Cyano oder Sulfomethyl ist,
R₈ C₁-C₄-Alkyl oder Carboxy bedeutet,
R₉ unsubstituiertes oder durch Halogen, Sulfo, C₁-C₄-Alkyl oder C₁-C₄-Alkoxy substituiertes Phenyl oder Naphthyl ist, und
R₁₀ Hydroxy oder Amino bedeutet, steht.

12. Verbindungen gemäss einem der Ansprüche 1 bis 10, dadurch gekennzeichnet, dass K für einen Rest der Formel 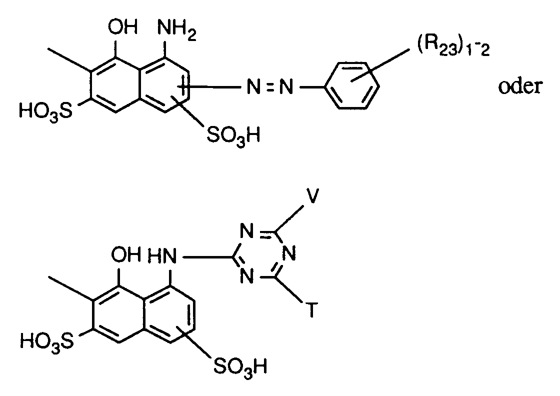 steht, worin (R₂₃)₁₋₂ für 1 oder 2 gleiche oder verschiedene Reste aus der Gruppe Sulfo, Methyl, Methoxy und Rest -SO₂-Y, worin Y die im Anspruch 1 angegebene Bedeutung hat, steht, T Chlor oder Fluor bedeutet und V Amino, N-C₁-C₄-Alkylamino oder N,N-Di-C₁-C₄-Alkylamino, wobei das Alkyl unsubstituiert oder durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl unsubstituiert oder durch C₁-C₄-Alkyl, C₁-C₄-Alkoxy, Amino, C₂-C₄-Alkanoylamino, Carboxy, Sulfo oder Halogen substituiert ist, einen Rest der Formel 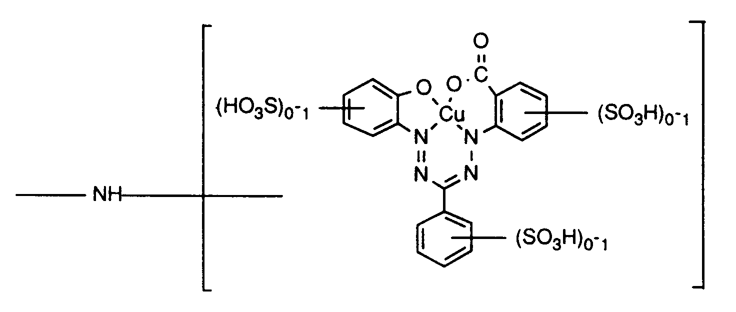 oder einen Monoazorest -(D - N=N - K₁), worin D einen Phenyl- oder 1- oder 2-Naphthylrest bedeutet, der durch 1 bis 3 Substituenten aus der Reihe Methyl, Methoxy, Chlor, Sulfo und Rest der Formel -SO₂-Y, worin Y die im Anspruch 1 angegebene Bedeutung hat, substituiert ist, und K für den Rest von 1-Amino-8-hydroxynaphthalin-3,6-disulfonsäure (H-Säure), für den Rest von K-, I- oder J-Säure oder für einen Rest der im Anspruch 11 angegebenen Formel (6a), (6b), (6d) oder (6e) steht, bedeutet.

13. Verbindungen gemäss einem der Ansprüche 1 bis 12, dadurch gekennzeichnet, dass Z ein faserreaktiver Rest der Formel 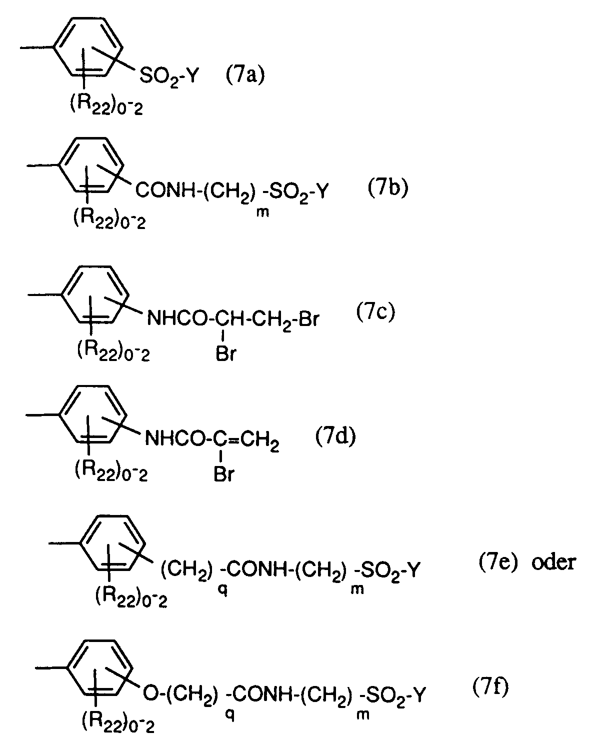 ist, worin Y die im Anspruch 1 angegebene Bedeutung hat, (R₂₂)₀₋₂ für 0 bis 2 gleiche oder verschiedene Reste aus der Gruppe Methyl, Methoxy, Chlor, Hydroxy und Sulfo steht, q die Zahl 1 oder 2 und m die Zahl 2 oder 3 bedeutet.

14. Verbindungen gemäss einem der Ansprüche 1 bis 13, dadurch gekennzeichnet, dass Z einen faserreaktiven Rest der Formel 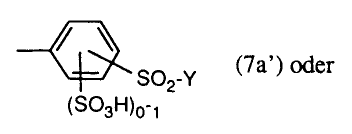 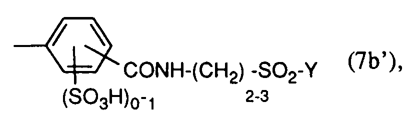 worin Y Vinyl oder β-Sulfatoethyl ist, bedeutet.

15. Verbindungen der Formel (1) gemäss einem der Ansprüche 1 bis 14, dadurch gekennzeichnet, dass sie mindestens zwei Sulfo- oder Sulfatogruppen aufweisen.

16. Verbindungen der Formel (1) gemäss Anspruch 1, dadurch gekennzeichnet, dass A₁ einen Rest der Formel 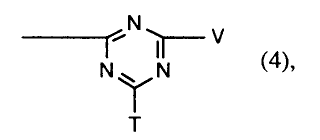 bedeutet, T Chlor oder Fluor ist, V C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist, durch 1 bis 3 Sulfogruppen substituiertes 2-Naphthylamino oder einen Reaktivrest der im Anspruch 2 angegebenen Formel (5a) bis (5g) bedeutet, K für einen 1- oder 2-Naphtholrest, der gegebenenfalls durch Sulfo oder einen Rest - SO₂-Y, worin Y die im Anspruch 1 angegebene Bedeutung hat, substituiert ist; für einen 1-oder 2-Naphthylaminrest, der gegebenenfalls durch Hydroxy, Sulfo oder einen Rest - SO₂-Y, worin Y die im Anspruch 1 angegeben Bedeutung hat, substituiert ist; oder für einen Rest der Formel 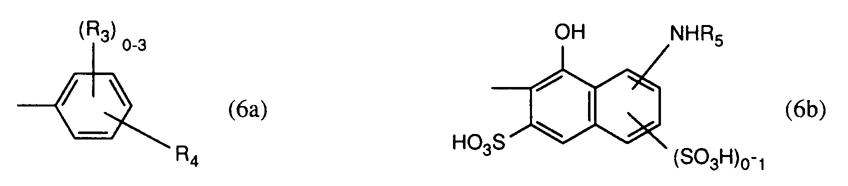 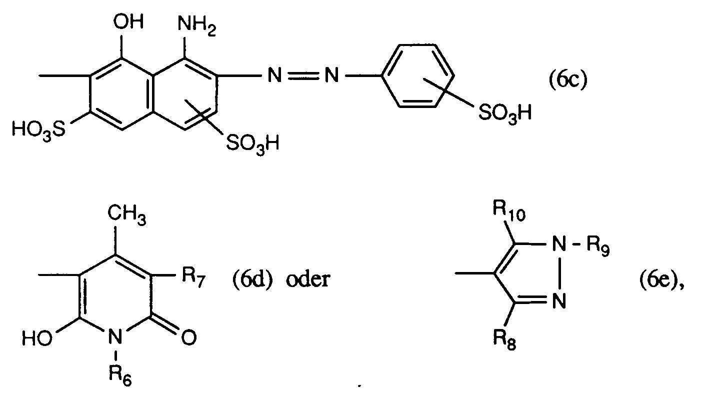 worin (R₃)₀₋₃ 0 bis 3 Reste aus der Gruppe C₁-C₄-Alkyl, C₁-C₄-Alkoxy, Halogen, C₁-C₄-Alkoxy-C₁-C₂-Alkoxy, Hydroxy, Hydroxy-C₁-C₂-Alkoxy, C₂-C₅-Alkanoyloxy, C₁-C₄-Alkylsulfonyl, C₂-C₅-Alkanoylamino, N-C₁-C₄-Alkylsulfamoyl und Sulfo bedeutet, R₄ Hydroxy, C₁-C₄-Alkoxy oder ein Rest -NR₁₁R₁₂ ist und R₁₁ und R₁₂ unabhängig voneinander Wasserstoff, C₂-C₅-Alkanoyl oder gegebenenfalls durch Hydroxy, Sulfo oder Sulfato substituiertes C₁-C₄-Alkyl bedeuten,R₅ für Wasserstoff, C₂-C₅-Alkanoyl, Benzoyl oder für einen Rest der zuvor angegebenen Formel (4) steht, R₆ C₁-C₄-Alkyl bedeutet, R₇ Carbamoyl, Cyano oder Sulfomethyl ist, R₈ C₁-C₄-Alkyl oder Carboxy bedeutet, R₉ unsubstituiertes oder durch Halogen, Sulfo, C₁-C₄-Alkyl oder C₁-C₄-Alkoxy substituiertes Phenyl oder Naphthyl ist, und R₁₀ Hydroxy oder Amino bedeutet, steht, Z ein faserreaktiver Rest der Formel 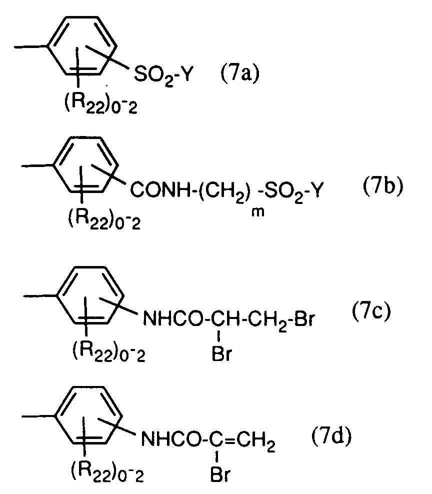 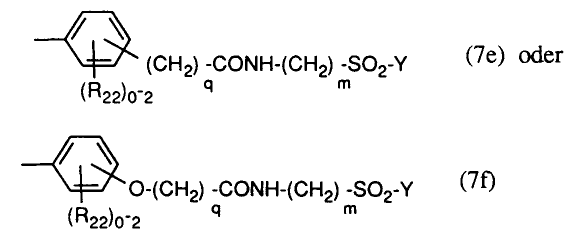 ist, worin Y die im Anspruch 1 angegebene Bedeutung hat, (R₂₂)₀₋₂ für 0 bis 2 gleiche oder verschiedene Reste aus der Gruppe Methyl, Methoxy, Chlor, Hydroxy und Sulfo steht, q die Zahl 1 oder 2 und m die Zahl 2 oder 3 bedeutet, und worin die Verbindungen der Formel (1) mindestens zwei Sulfo- oder Sulfatogruppen aufweisen.

17. Verfahren zur Herstellung von Verbindungen der Formel (1) gemäss Anspruch 1, dadurch gekennzeichnet, dass man eine Verbindung der Formel 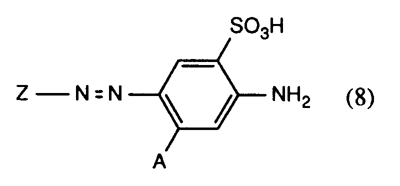 worin A und Z die unter der Formel (1) definierte Bedeutung haben diazotiert und mit einer der Kupplungskomponenten K-H kuppelt und gegebenenfalls eine weitere Umwandlungsreaktion anschliesst

18. Verwendung der Verbindungen der Formel (1) gemäss Anspruch 1 als Farbstoffe zum Färben oder Bedrucken von cellulosehaltigen Fasermaterialien.

19. Verwendung der Verbindungen gemäss Anspruch 18 zum Färben oder Bedrucken von Baumwolle.

20. Verbindungen der Formel 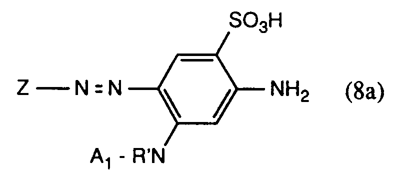 worin A₁,R' und Z die im Anspruch 1 angegebene Bedeutung haben.

## Claims

1. A compound of the formula 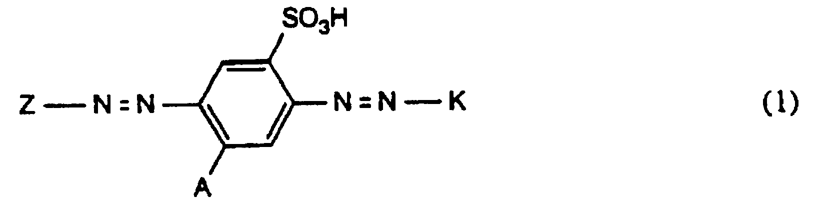 where
A is a fibre-reactive radical -NR'-A₁,
R' is hydrogen or C₁-C₄alkyl,
A₁ is a halopyrimidinyl, haloquinoxalinecarbonyl or triazinyl radical or a radical of the formula
-CO-CH₂-X (2a)
- CO - (CH₂)ₙ-SO₂- Y (2b),
- COCHX₁ - CH₂X₁ (2c) or
- COCX₁ = CH₂ (2d),
where Y is vinyl or -CH₂-CH₂-U and U is a leaving group, X and X₁ are each independently of the other chlorine or bromine, and n is an integer from 1 to 6,
K is the radical of a coupling component, and
Z is the radical of a diazo component of the benzene or naphthalene series which carries at least one fibre-reactive radical of the formula
- SO₂- Y (3a),
- CONH - (CH₂)ₘ- SO₂- Y (3b),
- CONH - (CH₂)ₘ₁- O - (CH₂)ₘ - SO₂- Y (3c),
- (O)ₚ- (CH₂)_{q}- CONH - (CH₂)ₘ- SO₂- Y (3d),
- NH - CO - CHX₁ - CH₂X₁ (3e) or
- NH - CO - CX₁ = CH₂ (3f)
where X₁ and Y are each as defined above, p is 0 or 1, and m, m₁ and q are each independently of the others an integer from 1 to 6, with the proviso that
K is not 5,7-disulfo-2-amino-1-naphthyl when A₁ is a triazinyl radical and Z is a phenyl radical which carries a fibre-reactive radical of the formula (3a) where Y is vinyl or -CH₂-CH₂-U and U is sulfato or chlorine.

2. A compound according to claim 1, wherein A₁ is a triazinyl radical of the formula 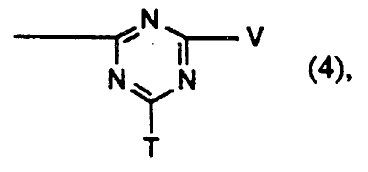
where T is chlorine, fluorine, bromine, 3-carboxypyridin-1-yl, 3-carbamoylpyridin-1-yl or a reactive radical of the formula 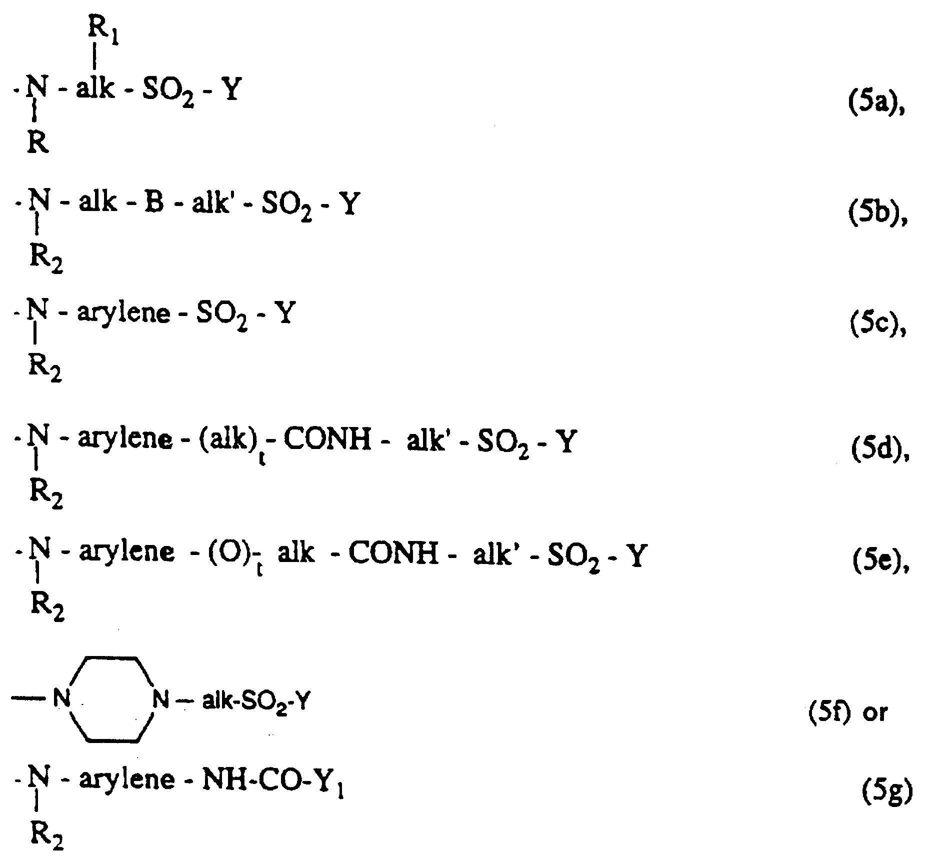
R is hydrogen, unsubstituted or hydroxyl-, sulfo-, sulfato-, carboxyl- or cyano-substituted C₁-C₄alkyl or a radical 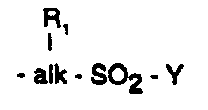
R₁ is hydrogen, hydroxyl, sulfo, sulfato, carboxyl, cyano, halogen, C₁-C₄alkoxycarbonyl, C₂-C₅alkanoyloxy, carbamoyl or the group -SO₂-Y,
R₂ is hydrogen or C₁-C₄alkyl,
alk and alk' are each independently of the other C₁-C₆alkylene,
arylen is an unsubstituted or sulfo-, carboxyl-, hyroxyl-, C₁-C₄alkyl-, C₁-C₄alkoxy- or halogen-substituted phenylene or naphthylene radical,
Y₁ is a group -CHX₁-CH₂X₁ or -CX₁=CH₂, and X₁ is chlorine or bromine,
B is the radical -O- or -NR₂-, and
t is 0 or 1, and
V independently has the meaning of T or is a non-reactive radical selected from the group consisting of hydroxyl, C₁-C₄alkoxy, phenoxy, C₁-C₄alkylthio, morpholino and substituted or unsubstituted amino.

3. A compound according to claim 1 or 2, wherein Y is vinyl, β-chloroethyl, β-sulfatoethyl, β-thiosulfatoethyl, β-acetoxyethyl, β-phenoxyethyl or β-phosphatoethyl, preferably β-sulfatoethyl or vinyl.

4. A compound according to claim 2, wherein T is chlorine or fluorine, and V is C₁-C₄alkoxy, C₁-C₄alkylthio, hydroxyl, amino, N-C₁-C₄alkylamino, with or without hydroxyl, sulfato or sulfo substitution in the alkyl moiety, morpholino, phenylamino or N-C₁-C₄alkyl-N-phenylamino, where the phenyl is in each case unsubstituted or sulfo-, carboxyl-, acetylamino-, methyl- or methoxy-substituted, sulfo-monosubstituted, -disubstituted or -trisubstituted 2-naphthylamino, or a reactive radical of the formula (5a) to (5g).

5. A compound according to any one of claims 2 to 4, wherein V is amino, N-C₁-C₄alkylamino, with or without hydroxyl, sulfato or sulfo substitution in the alkyl moiety, morpholino, phenylamino or N-C₁-C₄alkyl-N-phenylamino, where the phenyl is in each case unsubstituted or sulfo-, carboxyl-, acetylamino-, methyl- or methoxy-substituted, or sulfo-monosubstituted, -disubstituted or -trisubstituted 2-naphthylamino.

6. A compound according to any one of claims 2 to 5, wherein V is amino, N-methylamino, N-ethylamino, β-sulfoethylamino, phenylamino, 2-, 3- or 4-sulfophenylamino, 2,4- or 2,5-disulfophenylamino, mono-, di- or trisulfo-2-naphthylamino, N-C₁-C₄alkyl-N-phenylamino or morpholino.

7. A compound according to any one of claims 2 to 4, wherein V is a reactive radical of the formula (5a) to (5g) where R, R₁ and R₂ are each hydrogen, B is -O- or -NH-, alk and alk' are each independently of the other ethylene or propylene, arylen is unsubstituted or methyl-, methoxy-, chlorine-, hydroxyl-, carboxyl- or sulfo-substituted phenylene, Y is vinyl or β-sulfatoethyl, Y₁ is -CHBr-CH₂Br or -CBr=CH₂ and t is 0.

8. A compound according to any one of claims 2 to 4 or 7, where V is a fibre-reactive radical of the formula 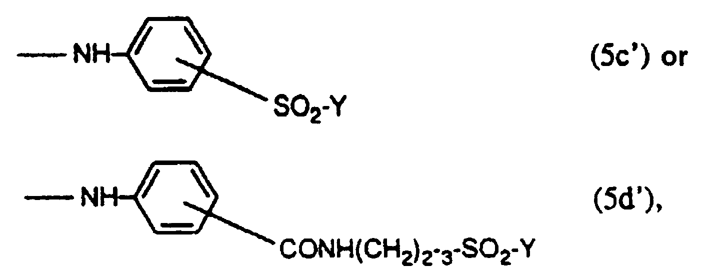 where Y is vinyl or β-sulfatoethyl.

9. A compound according to claim 1, wherein A₁ is a radical of the formula (2a) to (2d) where X is chlorine, X₁ is bromine, Y is vinyl or β-sulfatoethyl, and n is 2, 3 or 4.

10. A compound according to any one of claims 1 to 9, wherein K is the radical of an aminobenzene, of a phenol, of a naphthylamine, of a naphthol, of a pyrazolone, of a pyridone or of a pyrimidine.

11. A compound according to any one of claims 1 to 10, wherein K is a 1- or 2-naphthol radical with or without substitution by sulfo or by a radical -SO₂-Y, where Y is as defined in claim 1, or is a 1- or 2-naphthylamine radical with or without substitution by hydroxyl, sulfo or a radical -SO₂-Y, where Y is as defined in claim 1, or is a radical of the formula 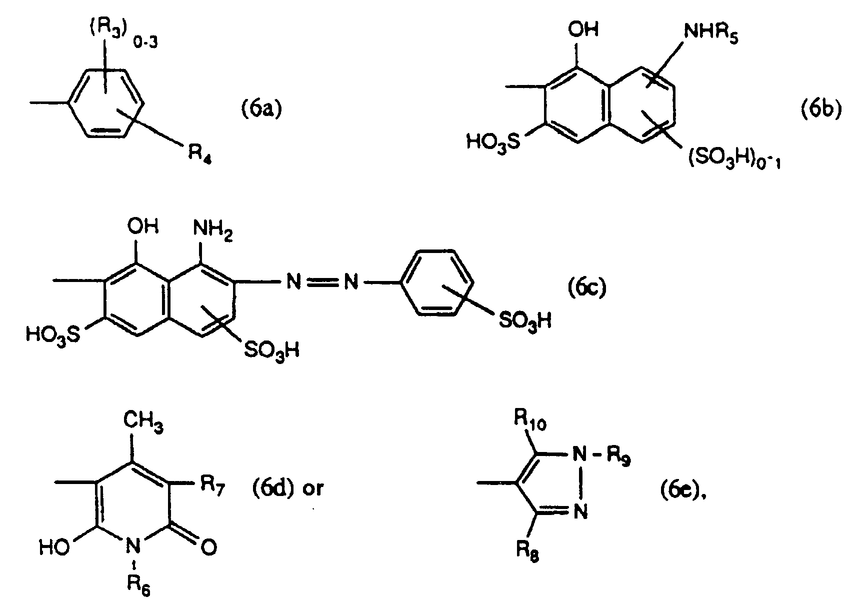 where
(R₃)₀₋₃ represents 0 to 3 radicals selected from the group consisting of C₁-C₄alkyl, C₁-C₄alkoxy, halogen, C₁-C₄alkoxy-C₁-C₂alkoxy, hydroxyl, hydroxy-C₁-C₂alkoxy, C₂-C₅alkanoyloxy, C₁-C₄alkylsulfonyl, C₂-C₅alkanoylamino, N- C₁-C₄alkylsulfamoyl and sulfo,
R₄ is hydroxyl, C₁-C₄alkoxy or a radical -NR₁₁R₁₂ and R₁₁ and R₁₂ are each independently of the other hydrogen, C₂-C₅alkanoyl or unsubstituted or hydroxyl-, sulfo- or sulfato-substituted C₁-C₄alkyl,
R₅ is hydrogen, C₂-C₅alkanoyl, benzoyl or a radical of the formula (4) indicated in claim 2,
R₆ is C₁-C₄alkyl,
R₇ is carbamoyl, cyano or sulfomethyl,
R₈ is C₁-C₄alkyl or carboxyl,
R₉ is unsubstituted or halogen-, sulfo-, C₁-C₄alkyl- or C₁-C₄alkoxy-substituted phenyl or naphthyl, and
R₁₀ is hydroxyl or amino.

12. A compound according to any one of claims 1 to 10, wherein K is a radical of the formula 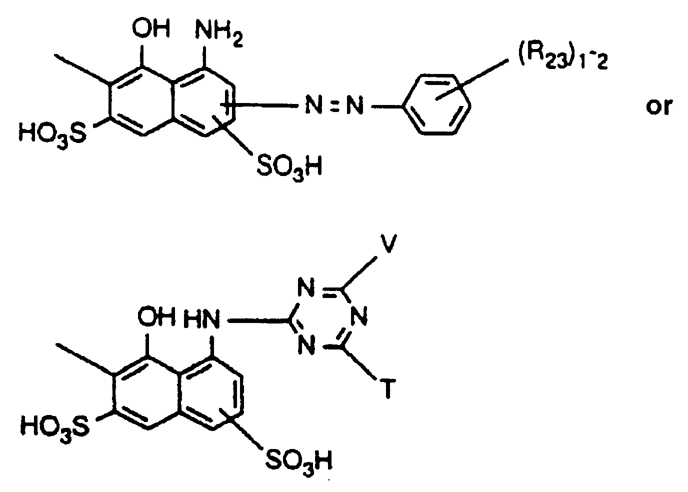 where (R₂₃)₁₋₂ represents 1 or 2 identical or different radicals selected from the group consisting of sulfo, methyl, methoxy and -SO₂-Y, where Y is as defined in claim 1, T is chlorine or fluorine, and V is amino, N-C₁-C₄alkylamino or N,N-di-C₁-C₄alkylamino, the alkyl being unsubstituted or sulfo-, sulfato-, hydroxyl-, carboxyl- or phenyl-substituted, cyclohexylamino, N-C₁-C₄alkyl-N-phenylamino or phenylamimo or naphthylamino, the phenyl or naphthyl being unsubstituted or C₁-C₄alkyl -, C₁-C₄alkoxy-, amino-, C₁-C₄alkanoylamino, carboxyl-, sulfo- or halogen-substituted, a radical of the formula 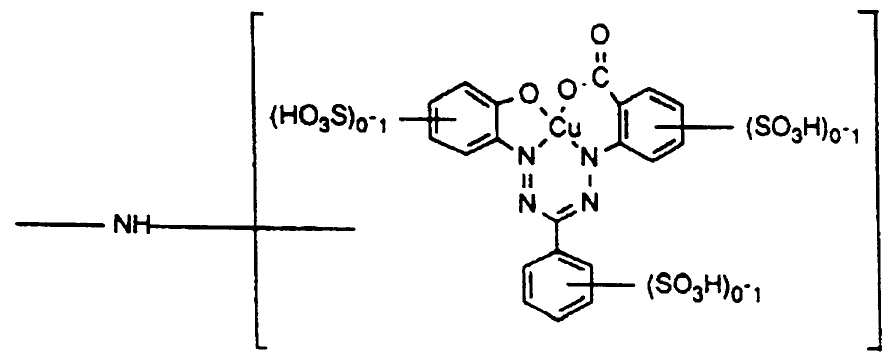 or a monoazo radical -(D-N=N-K₁), where D is a phenyl or 1-or 2-naphthyl radical which is substituted by from 1 to 3 substituents selected from the group consisting of methyl, methoxy, chlorine, sulfo and -SO₂-Y, where Y is as defined in claim 1, and K is the radical of 1-amino-8-hydroxynaphthalene-3,6-disulfonic acid (H-acid), the radical of K-, I- or J-acid, or a radical of the formula (6a), (6b), (6d) or (6e) indicated in claim 11.

13. A compound according to any one of claims 1 to 12, wherein Z is a fibre-reactive radical of the formula 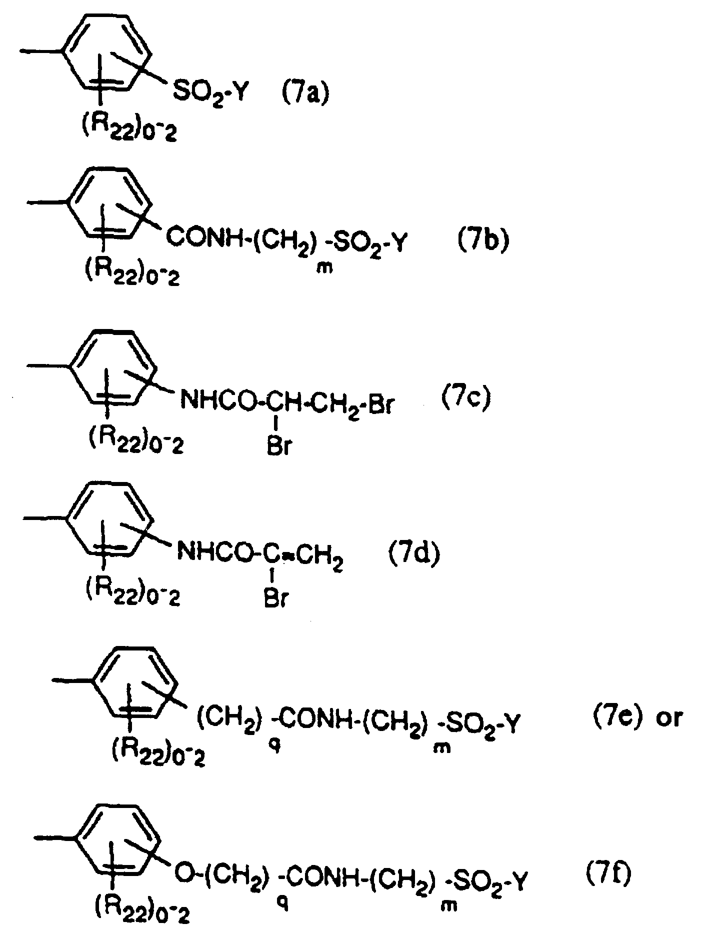 where Y is as defined in claim 1, (R₂₂)₀₋₂ represents 0 to 2 identical or different radicals selected from the group consisting of methyl, methoxy, chlorine, hydroxyl and sulfo, q is 1 or 2, and m is 2 or 3.

14. A compound according to any one of claims 1 to 13, wherein Z is a fibre-reactive radical of the formula 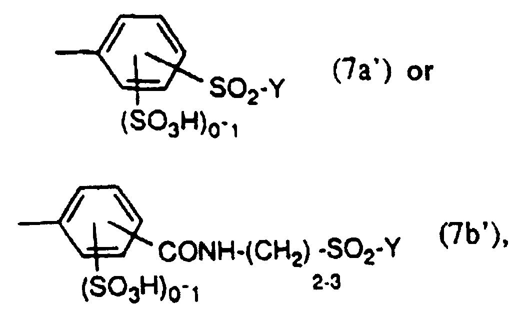 where Y is vinyl or β-sulfatoethyl.

15. A compound of the formula (1) according to any one of claims 1 to 14, having at least two sulfo or sulfato groups.

16. A compound of the formula (1) according to claim 1, wherein A₁ is a radical of the formula 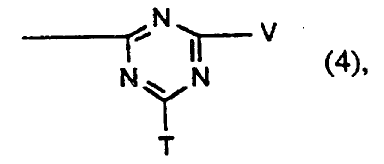 T is chlorine or fluorine, V is C₁-C₄alkoxy, C₁-C₄alkylthio, hydroxyl, amino, N-C₁-C₄alkylamino with or without hydroxyl, sulfato or sulfo substitution in the alkyl moiety, morpholino, phenylamino or N-C₁-C₄alkyl-N-phenylamino, where the phenyl is in each case unsubstituted or sulfo-, carboxyl-, acetylamino-, methyl- or methoxy-substituted, sulfo-monosubstituted, -disubstituted or -trisubstituted 2-naphthylamino or a reactive radical of the formula (5a) to (5g) indicated in claim 2, K is a 1- or 2-naphthol radical with or without substitution by sulfo or by a radical -SO₂-Y, where Y is as defined in claim 1, or is a 1- or 2-naphthylamine radical with or without substitution by hydroxyl, sulfo or a radical -SO₂-Y, where Y is as defined in claim 1, or is a radical of the formula 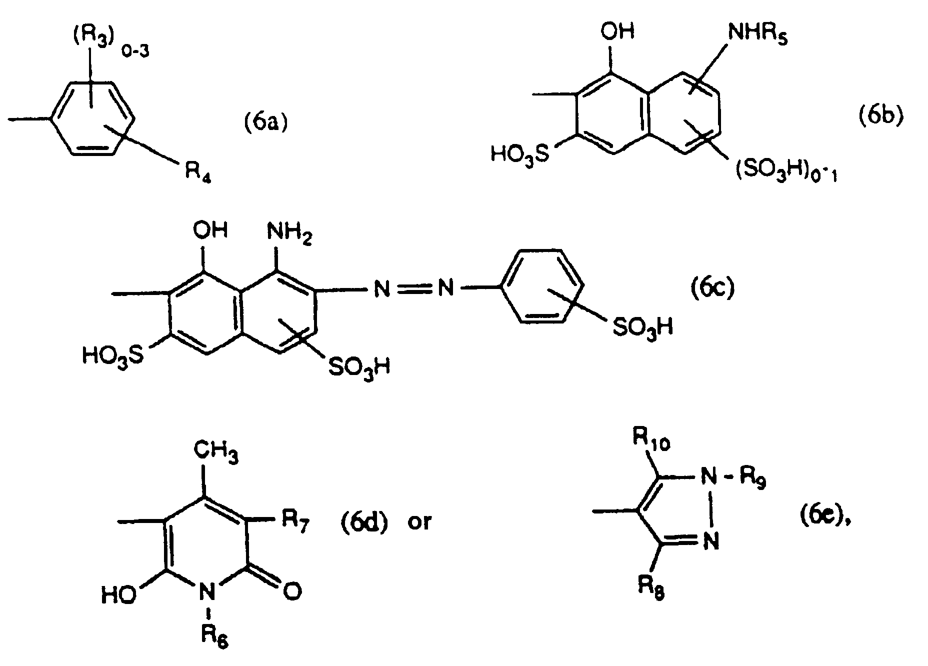 where (R₃)₀₋₃ represents 0 to 3 radicals selected from the group consisting of C₁-C₄alkyl, C₁-C₄alkoxy, halogen, C₁-C₄alkoxy-C₁-C₂alkoxy, hydroxyl, hydroxy-C₁-C₂alkoxy, C₂-C₅alkanoyloxy, C₁-C₄alkylsulfonyl, C₂-C₅alkanoylamino, N-C₁-C₄alkylsulfamoyl and sulfo, R₄ is hydroxyl, C₁-C₄alkoxy or a radical -NR₁₁R₁₂ and R₁₁ and R₁₂ are each independently of the other hydrogen, C₂-C₅alkanoyl or unsubstituted or hydroxyl-, sulfo- or sulfato-substituted C₁-C₄alkyl, R₅ is hydrogen, C₂-C₅alkanoyl, benzoyl or a radical of the above-indicated formula (4), R₆ is C₁-C₄alkyl, R₇ is carbamoyl, cyano or sulfomethyl, R₈ is C₁-C₄alkyl or carboxyl, R₉ is unsubstituted or halogen-, sulfo-, C₁-C₄alkyl- or C₁-C₄alkoxy-substituted phenyl or naphthyl, and R₁₀ is hydroxyl or amino, Z is a fibre-reactive radical of the formula 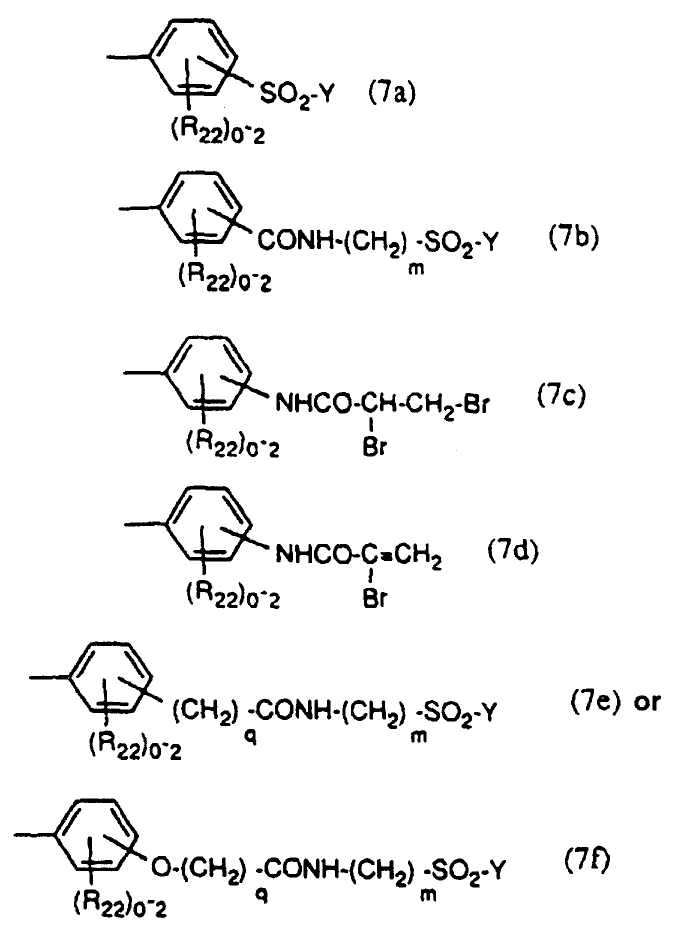 where Y is as defined in claim 1, (R₂₂)₀₋₂ represents 0 to 2 identical or different radicals selected from the group consisting of methyl, methoxy, chlorine, hydroxyl and sulfo, q is 1 or 2, and m is 2 or 3, and where the compounds of the formula (1) have at least two sulfo or sulfato groups.

17. A process for preparing a compound of the formula (1) according to claim 1, which comprises diazotizing a compound of the formula 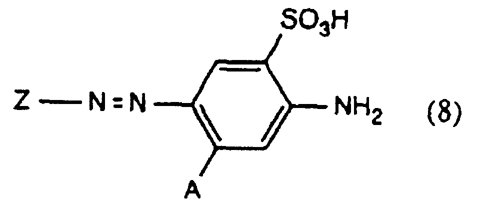 where A and Z are each as defined in the formula (1), and coupling the diazotization product with a coupling component K-H with or without a further conversion reaction.

18. The use of the compound of formula (1) according to claim 1 as a dye for dyeing or printing cellulosic fibre materials.

19. A use according to claim 18 for dyeing or printing cotton.

20. A compound of the formula 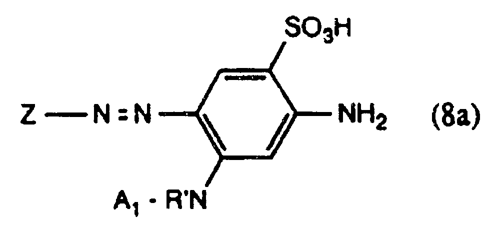 where A₁, R' and Z are each as defined in claim 1.

## Revendications

1. Composés de formule 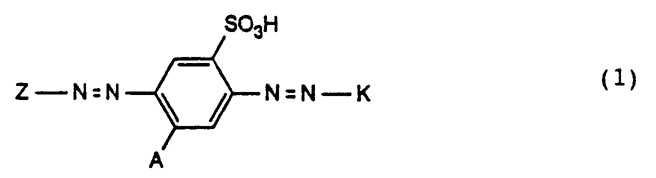 où
A représente un reste réactif sur la fibre -NR'-A₁,
R' représente un atome d'hydrogène ou un groupe alkyle en C₁-C₄,
A₁ représente un reste halopyrimidinyle, haloquinoxalinecarbonyle ou triazinyle ou un reste de formule
-CO-CH₂-X (2a),
-CO-(CH₂)ₙ-SO₂-Y (2b),
-COCHX₁-CH₂X₁ (2c) ou
-COCX₁=CH₂ (2d),
où
Y représente un groupe vinyle ou un reste -CH₂-CH₂-U et U représente un groupe partant,
X et X₁ représentent chacun, indépendamment l'un de l'autre, un atome de chlore ou de brome, et
n est un entier de 1 à 6,
K représente le reste d'un composant de copulation, et
Z représente le reste d'un composant de diazotation de la famille du benzène ou du naphtalène, lequel présente au moins un reste réactif sur la fibre de formule
-SO₂-Y (3a),
-CONH-(CH₂)ₘ-SO₂-Y (3b),
-CONH-(CH₂)ₘ₁-O-(CH₂)ₘ-SO₂-Y (3c),
-(O)ₚ-(CH₂)_{q}-CONH-(CH₂)ₘ-SO₂-Y (3d),
-NH-CO-CHX₁-CH₂X₁ (3e) ou
-NH-CO-CX₁=CH₂ (3f)
où
X₁ et Y possèdent chacun la signification donnée ci-dessus,
p vaut 0 ou 1 et
m, m₁ et q sont chacun, indépendamment l'un de l'autre, un entier de 1 à 6,
à la condition que
K ne représente pas 5,7-disulfo-2-amino-napht-1-yle lorsque A₁ représente un reste triazinyle et Z représente un reste phényle portant un reste réactif sur la fibre de formule (3a), où Y représente un groupe vinyle ou un reste -CH₂-CH₂-U et U représente un groupe sulfato ou un atome de chlore.

2. Composés selon la revendication 1, caractérisés en ce que A₁ représente un reste triazinyle de formule 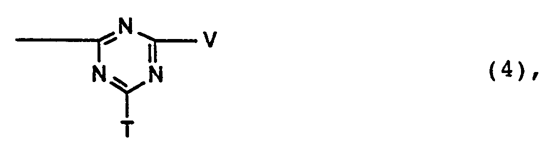 dans laquelle T représente un atome de chlore, de fluor, de brome, des groupes 3-carboxypyridin-1-yle, 3-carbamoylpyridin-1-yle ou un reste réactif 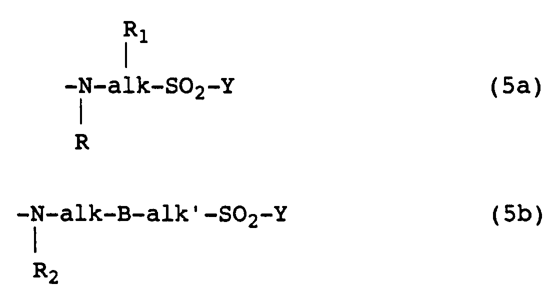 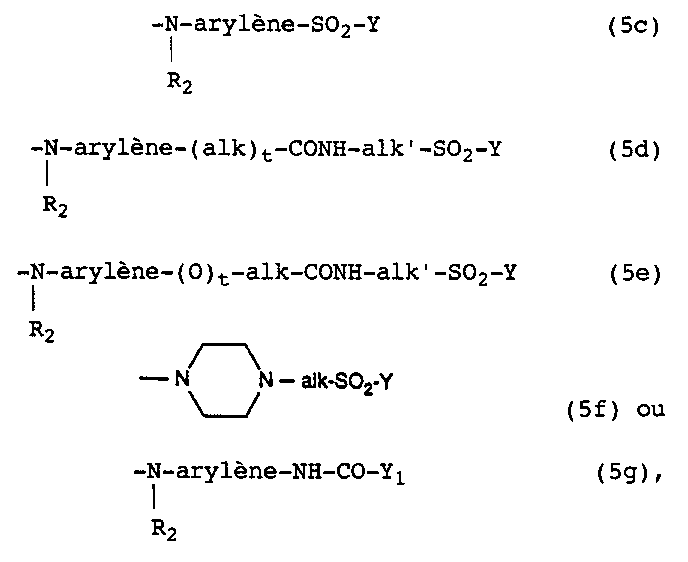
R représente un atome d'hydrogène, un groupe alkyle en C₁-C₄ éventuellement substitué par des substituants hydroxy, sulfo, sulfato, carboxy ou cyano, ou représente un reste , 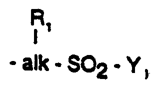
R₁ représente un atome d'hydrogène, des groupes hydroxy, sulfo, sulfato, carboxy, cyano, halogène, (alkoxy en C₁-C₄)carbonyle, (alcanoyl en C₂-C₅)-oxy, carbamoyle ou le groupe -SO₂-Y,
R₂ représente un atome d'hydrogène ou un groupe alkyle en C₁-C₄,
alk et alk' représentent, indépendamment l'un de l'autre, un groupe alkylène en C₁-C₆,
arylène représente un reste phénylène ou naphtylène non substitué ou substitué par des substituants sulfo, carboxy, hydroxy, alkyle en C₁-C₄, alkoxy en C₁-C₄ ou halogène,
Y₁ représente un groupe -CHX₁-CH₂X₁ ou CX₁=CH₂ et X₁ représente un atome de chlore ou de brome,
B représente le reste -O- ou -NR₂-, et
t vaut 0 ou 1, et
V possède, indépendamment, la signification de T ou représente un reste non réactif pris parmi les groupes hydroxy, alkoxy en C₁-C₄, phénoxy, (alkyl en C₁-C₄)thio, morpholino et amino éventuellement substitué.

3. Composés selon la revendication 1 ou 2, caractérisés en ce que Y représente des groupes vinyle, β-chloréthyle, β-sulfatoéthyle, β-thiosulfatoéthyle, β-acétoxyéthyle, β-phénoxyéthyle ou β-phosphatoéthyle et de préférence β-sulfatoéthyle ou vinyle.

4. Composés selon la revendication 2, caractérisés en ce que T représente un atome de chlore ou de fluor et Y représente des groupes alkoxy en C₁-C₄, (alkyl en C₁-C₄)thio, hydroxy, amino, N-(alkyl en C₁-C₄)amino lequel est non substitué ou substitué dans le fragment alkyle par des substituants hydroxy, sulfato ou sulfo, morpholino, phénylamino ou N-(alkyl en C₁-C₄)-N-phényl-amino, où dans tous les cas le groupe phényle est non substitué ou substitué par des substituants sulfo, carboxy, acétylamino, méthyle ou méthoxy, représente un groupe 2-naphtylamino substitué par 1 à 3 groupes sulfo ou un reste réactif de formule (5a) à (5g).

5. Composés selon l'une des revendications 2 à 4, caractérisés en ce que V représente des groupes amino, N-(alkyl en C1-C4)-amino, lequel est non substitué ou substitué dans le fragment alkyle par des substituants hydroxy, sulfato ou sulfo, morpholino, phénylamino ou N-(alkyl en C1-C4)-N-phénylamino, où dans tous les cas le groupe phényle est non substitué ou substitué par des substituants sulfo, carboxy, acétylamino, méthyle ou méthoxy, représente un groupe 2-naphtylamino substitué par 1 à 3 groupes sulfo.

6. Composés selon l'une des revendications 2 à 5, caractérisés en ce que V représente des groupes amino, N-méthylamino, N-éthylamino, β-sulfatoéthylamino, phénylamino, 2-, 3- ou 4-sulfophénylamino, 2,4- ou 2,5-disulfophénylamino, mono-, di- ou trisulfo-2-naphtylamino, N-(alkyl en C₁-C₂)-N-phénylamino ou morpholino.

7. Composés selon l'une des revendications 2 à 4, caractérisés en ce que V représente un reste réactif de formule (5a) à (5g), où R, R₁ et R₂ représentent chacun un atome d'hydrogène, B représente le reste -O- ou -NH-, alk et alk' représentent chacun, indépendamment l'un de l'autre, des groupes éthylène ou propylène, un groupe arylène représente phénylène non substitué ou substitué par des substituants méthyle, méthoxy, chloro, hydroxy, carboxy ou sulfo, Y représente des groupes vinyle ou β-sulfatoéthyle, Y₁ représente -CHBr-CH₂Br ou CBr=CH₂ et t vaut 0.

8. Composés selon l'une des revendications 2 à 4 ou 7 caractérisés en ce que V représente un reste réactif sur la fibre de formule 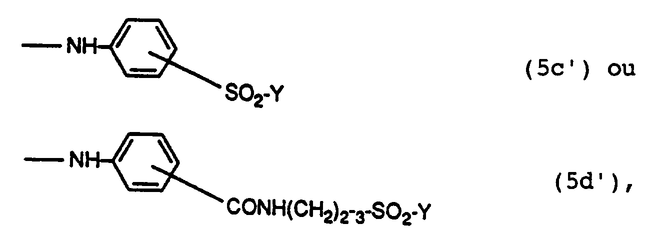 où Y représente des groupes vinyle ou β-sulfatoéthyle.

9. Composés selon la revendication 1, caractérisés en ce que A₁ représente un reste de formule (2a) à (2d), où X représente un atome de chlore, X₁ représente un atome de brome, Y représente un groupe vinyle ou β-sulfatoéthyle et n vaut 2, 3 ou 4.

10. Composés selon l'une des revendications 1 à 9, caractérisés en ce que K représente un reste aminobenzène, phénol, naphtylamine, naphtol, pyrazolone, pyridone ou pyrimidine.

11. Composés selon l'une des revendications 1 à 10, caractérisés en ce que K représente un reste 1- ou 2-naphtol, lequel est éventuellement substitué par un substituant sulfo ou un retste -SO₂-Y, où Y possède la signification donnée à la revendication 1 ; un reste 1-ou naphtylamine, lequel est éventuellement substitué par des substituants hydroxy, sulfo ou un reste -SO₂-Y, où Y possède la signification donnée à la revendication 1 ; ou un reste de formule 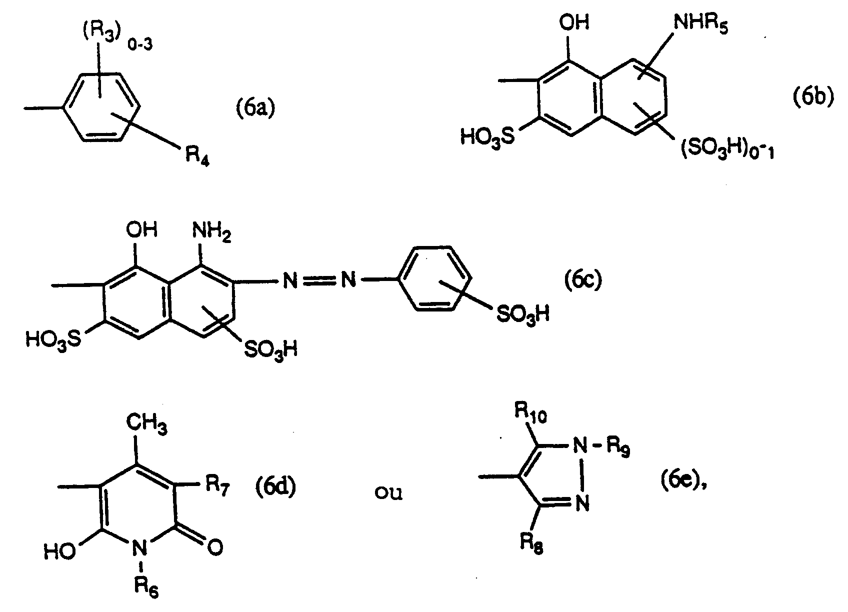 où
(R₃)₀₋₃ représente 0 à 3 restes pris parmi les restes alkyle en C₁-C₄, alkoxy en C₁-C₄, halogène, (alkoxy en C₁-C₄)-(alkoxy en C₁-C₂), hydroxy, hydroxyalkoxy en C₁-C₂, (alcanoyl en C₂-C₅)oxy, (alkyl en C₁-C₄)sulfonyle, (alcanoyl en C₂-C₅)-amino, N-(alkyl en C₁-C₄)sulfamoyle et sulfo,
R₄ représente des groupes hydroxy, alkoxy en C₁-C₄ ou un reste -NR₁₁R₁₂ et R₁₁ et R₁₂ représentent, indépendanment l'un de l'autre, des atomes d'hydrogène, des restes alcanoyle en C₂-C₅ ou alkyle en C₁-C₄ éventuellement substitué par des substituants hydroxy, sulfo ou sulfato,
R₅ représente un atome d'hydrogène, des restes alcanoyle en C₂-C₅, benzoyle ou un reste de formule (4) donnée auparavant,
R₆ représente un groupe alkyle en C₁-C₄,
R₇ représente un groupe carbamoyle, cyano ou sulfométhyle,
R₈ représente un groupe alkyle en C₁-C₄ ou carboxy,
R₉ représente des groupes phényle ou naphtyle non substitué ou substitué par des substituants halogène, sulfo, alkyle en C₁-C₄ ou alkoxy en C₁-C₄, et
R₁₀ représente des groupes hydroxy ou amino.

12. Composés selon l'une des revendications 1 à 10, caractérisés en ce que K représente un reste de formule 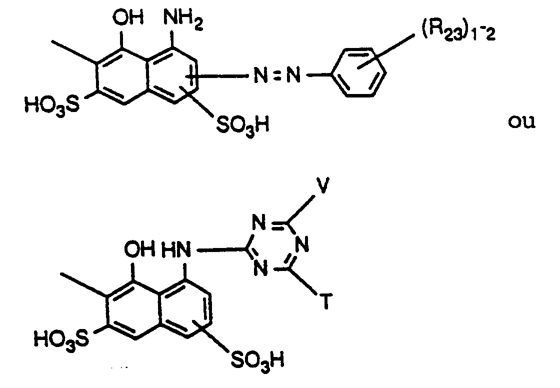 où
(R₂₃)₁₋₂ représente des restes identiques ou différents pris dans le groupe des restes sulfo, méthyle, méthoxy et un reste -SO₂-Y, où Y possède la signification donnée auparavant, T représente un atome de chlore ou de fluor, et V représente des groupes amino, N-(alkyl en C₁-C₄)-amino ou N,N-di-(alkyl en C₁-C₄)-amino, le groupe alkyle étant éventuellement substitué par des substituants sulfo, sulfato, hydroxy, carboxy ou phényle, cyclohexylamino, N-(alkyl en C₁-C₄)-N-phénylamino ou phénylamino ou naphtylamino, les groupes phényle ou naphtyle étant éventuellement substitués par exemple par des substituants alkyle en C₁-C₄, alkoxy en C₁-C₄, amino, (alcanoyl en C₂-C₄)amino, carboxy, sulfo ou halogène, un reste de formule 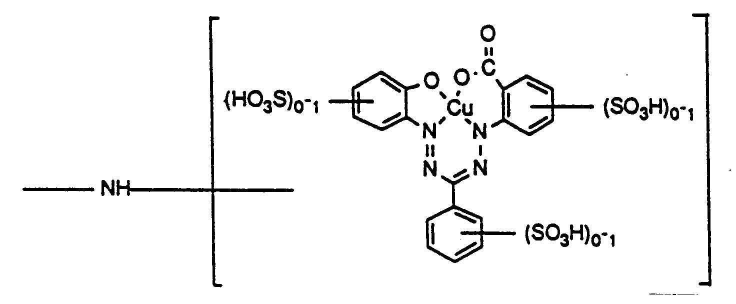 ou un reste monoazoïque -(D-N=N-K₁), où D représente un reste phényle ou 1- ou 2-naphtyle, lequel est substitué par 1 à 3 substituants pris parmi les substituants méthyle, méthoxy, chloro, sulfo ou un reste de formule -SO₂-Y, où Y possède la signification donnée auparavant, et K représente le reste acide 1-amino-8-hydroxy-naphtalène-3,6-disulfonique (acide H), le reste d'un acide K, I ou J ou un reste de formule (6a), (6b), (6d) ou (6e) donnée auparavant.

13. Composés selon l'une des revendications 1 à 12, caractérisés en ce que Z représente un reste réactif sur la fibre de formule 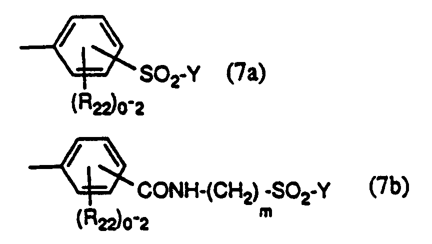 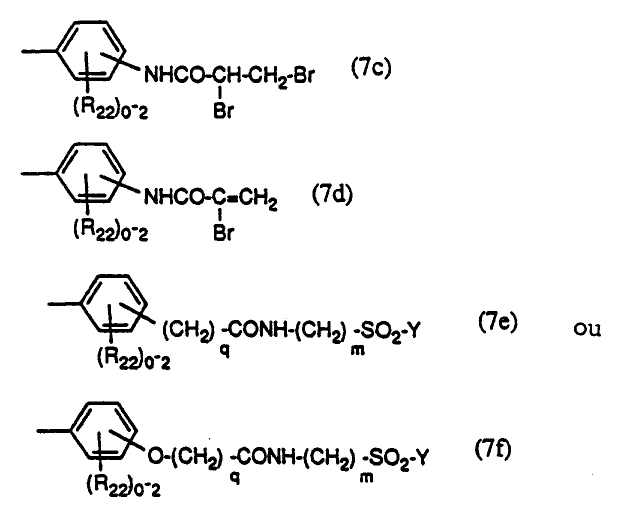 où Y possède la signification donnée à la revendication 1, (R₂₂)₀₋₂ représente 0 à 2 restes identiques ou différents pris parmi les groupes méthyle, méthoxy, chloro, hydroxy et sulfo, q vaut 1 ou 2 et m vaut 2 ou 3.

14. Composés selon l'une des revendications 1 à 13, caractérisés en ce que Z représente un reste réactif sur la fibre de formule 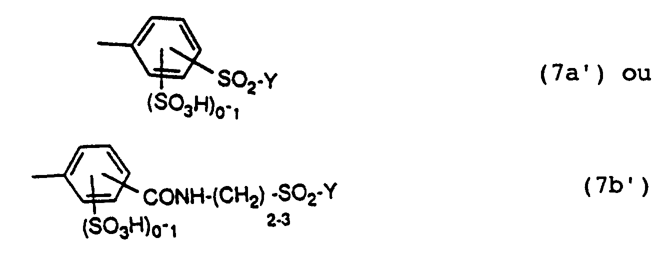 où Y représente des groupes vinyle ou β-sulfatoéthyle.

15. Composés de formule (1) selon l'une des revendications 1 à 14, caractérisés en ce qu'ils présentent au moins deux groupes sulfo ou sulfato.

16. Composés de formule (1) selon la revendication 1, caractérisés en ce que A₁ représente un reste de formule 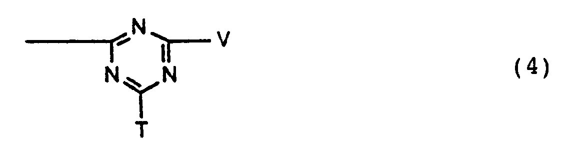
T représente un atome de chlore ou de fluor,
V représente des groupes alkoxy en C₁-C₄, (alkyl en C₁-C₄)thio, hydroxy, amino, N-(alkyl en C₁-C₄)-amino, lequel est non substitué ou substitué dans le fragment alkyle par des substituants hydroxy, sulfato ou sulfo, morpholino, phénylamino ou N-(alkyl en C₁-C₄)-N-phénylamino, où phényle dans tous les cas non substitué ou substitué par des substituants sulfo, carboxy, acétylamino, méthyle ou méthoxy, représente 2-naphtylamino substitué par 1 à 3 groupes sulfo ou un reste réactif de formule (5a) à (5g) donnée à la revendication 2, K représente un reste 1- ou 2-naphtol, lequel est éventuellement substitué par un substituant sulfo ou un reste -SO₂-Y, où Y possède la signification donnée à la revendication 1 ; représente un reste 1- ou 2-naphtylamino, lequel est éventuellement substitué par des substituants hydroxy, sulfo ou un reste -SO₂-Y, où Y possède la signification donnée à la revendication 1 ; ou un reste de formule 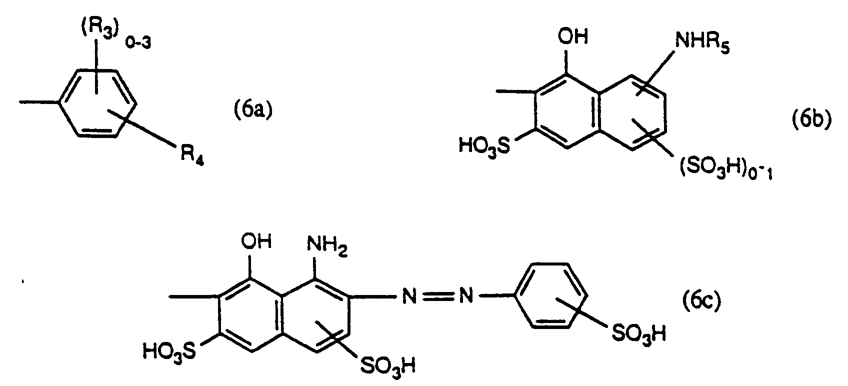 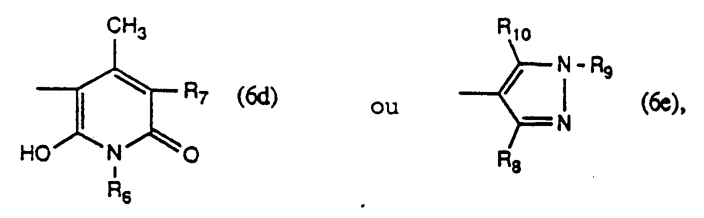 où
(R₃)₀₋₃ représente 0 à 3 restes pris parmi les restes alkyle en C₁-C₄, alkoxy en C₁-C₄, halogène, (alkoxy en C₁-C₄)-(alkoxy en C₁-C₂), hydroxy, hydroxyalkoxy en C₁-C₂, (alcanoyl en C₂-C₅)oxy, (alkyl en C₁-C₄)sulfonyle, (alcanoyl en C₂-C₅)-amino, N-(alkyl en C₁-C₄)sulfamoyle et sulfo,
R₄ représente des groupes hydroxy, alkoxy en C₁-C₄ ou un reste -NR₁₁R₁₂ et R₁₁ et R₁₂ représentent, indépendamment l'un de l'autre, des atomes d'hydrogène, des restes alcanoyle en C₂-C₅ ou alkyle en C₁-C₄ éventuellement substitué par des substituants hydroxy, sulfo ou sulfato,
R₅ représente un atome d'hydrogène, des restes alcanoyle en C₂-C₅, benzoyle ou un reste de formule (4) donnée auparavant,
R₆ représente un groupe alkyle en C₁-C₄,
R₇ représente un groupe carbamoyle, cyano ou sulfométhyle,
R₈ représente un groupe alkyle en C₁-C₄ ou carboxy,
R₉ représente des groupes phényle ou naphtyle non substitué ou substitué par des substituants halogène, sulfo, alkyle en C₁-C₄ ou alkoxy en C₁-C₄, et
R₁₀ représente des groupes hydroxy ou amino,
Z représente un reste de formule 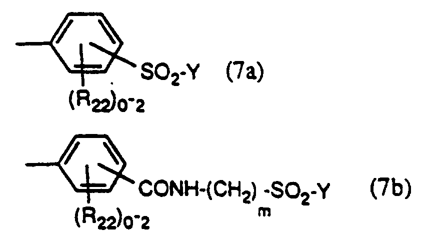 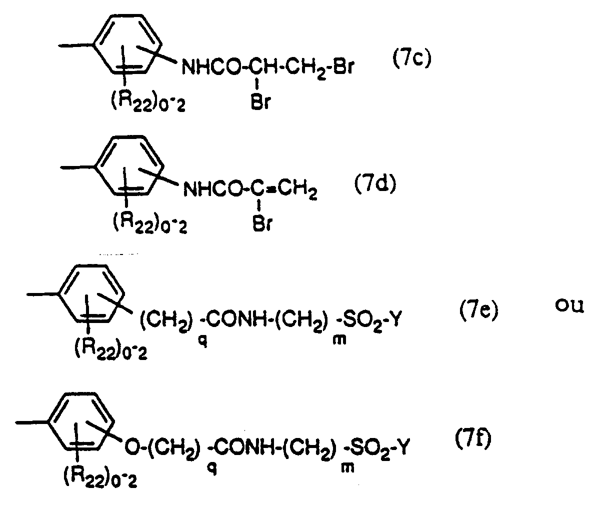
où Y possède la signification donnée à la revendication 1, (R₂₂)₀₋₂ représente 0 à 2 restes identiques ou différents pris parmi les groupes méthyle, méthoxy, chloro, hydroxy et sulfo, q vaut 1 ou 2 et m vaut 2 ou 3, et où les composés de formule (1) présentent au moins deux groupes sulfo ou sulfato.

17. Procédé de préparation de composés de formule (1) selon la revendication 1, caractérisé en ce qu'on diazote un composé de formule 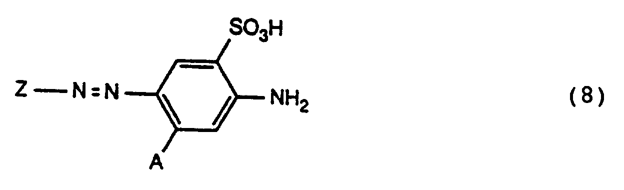 où A et Z possède les significations données à la formule (1) et on copule avec un composant de copulation K-H et on fait éventuellement suivre par une réaction de transformation ultérieure.

18. Utilisation des composés de formule (1) selon la revendication 1 en tant que colorants pour la teinture et l'impression de matières de fibres cellulosiques.

19. Utilisation des composés selon la revendication 18 pour la teinture ou l'impression de coton.

20. Composés de formule 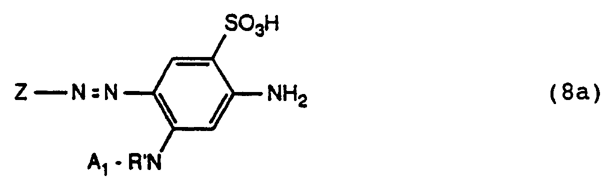 où A₁, R' et Z possèdent la signification donnée à la revendication 1.
